# EUROPÄISCHE PATENTANMELDUNG

(11) **EP 4 089 444 A1**
(43) Veröffentlichungstag der Anmeldung: **16.11.2022**
(21) Anmeldenummer: 21173043.7
(22) Anmeldetag: 10.05.2021
(51) Int. Cl.: G01S 19/16, B62H 5/20, G08G 1/00, H04W 4/029, B60R 25/00

(54) **ELEKTRONISCHES GERÄT ZUR ORTUNG EINES FAHRRADS UND FAHRRAD MIT EINEM SOLCHEN GERÄT**

(71) Anmelder: Motogadget GmbH, 10997 Berlin (DE)
(72) Erfinder: Keller, Garrit, 10997 Berlin (DE)
(74) Vertreter: Wörz, Volker Alfred

(57) **Zusammenfassung**

Die Erfindung betrifft ein elektronisches Gerät (60) zur Ortung eines Fahrrads, das Gerät umfassend:
ein Ortungsmodul (70) zum Empfang von Signalen (110) von Navigationssatelliten (112) und zur Ermittlung einer Position des Fahrrads in Abhängigkeit von den empfangenen Signalen, ein Drahtloskommunikationsmodul (72) zum Aussenden von Daten (114) mit Informationen über die ermittelte Position des Fahrrads über ein Drahtloskommunikationsnetzwerk (116), und ein Energiemodul (68) zur Versorgung des Ortungsmoduls und des Drahtloskommunikationsmoduls mit elektrischer Energie. Es wird vorgeschlagen, daß das Gerät ausgebildet ist, von außen unsichtbar im Inneren einer Stange oder eines Rohrs (32) des Fahrrads angeordnet und dort vorzugsweise befestigt zu werden. Bevorzugt ist das Drahtloskommunikationsmodul ausgebildet, die Daten über ein LP WAN, insbesondere über ein LTE-M- und/oder ein NB loT-Netzwerk zu übertragen.

## Beschreibung

Die vorliegende Erfindung betrifft ein elektronisches Gerät zur Ortung eines Fahrrads mit oder ohne motorischen Zusatzantrieb. Das Gerät umfasst:
- ein Ortungsmodul zum Empfang von Signalen von Navigationssatelliten und zur Ermittlung einer Position des Fahrrads in Abhängigkeit von den empfangenen Signalen,
- ein Drahtloskommunikationsmodul zum Aussenden von Daten mit Informationen über die ermittelte Position des Fahrrads über ein Drahtloskommunikationsnetzwerk, und
- ein Energiemodul zur Versorgung des Ortungsmoduls und des Drahtloskommunikationsmoduls mit elektrischer Energie.
Ferner betrifft die Erfindung ein Fahrrad mit einem solchen elektronischen Ortungsgerät.

Solche Ortungsgeräte werden auch als GPS-Tracker bezeichnet, da sie in der Regel ein Ortungsmodul mit GPS-Empfänger aufweisen, der zum Empfang von Signalen von GPS-Satelliten ausgebildet ist. Anhand von Zeitstempeln der von verschiedenen Satelliten empfangenen Signalen und einem Vergleich mit dem tatsächlichen Empfangszeitpunkt der Signale durch den GPS-Empfänger, kann das Ortungsmodul die Entfernung zu den einzelnen Satelliten und ferner die aktuelle Position mit einer Genauigkeit von wenigen Metern berechnen. Voraussetzung ist allerdings, dass das Ortungsmodul eine mit Uhren der Satelliten synchronisierte Uhr aufweist.

Bei den bekannten GPS-Trackern weist das Drahtloskommunikationsmodul in der Regel ein Global System for Mobile Communication (GSM)-Modul auf, welches zum Aussenden von Daten über ein GSM-Funkkommunikationsnetzwerk, insbesondere nach dem EDGE-Standard, ausgebildet ist. Dabei werden die Daten mit den Informationen über die ermittelte Position des Fahrrads über eine Infrastruktur übermittelt, die eigentlich für Verbraucherbedürfnisse zur Übertragung großer Datenmengen (z.B. Telefonie, Streaming) entwickelt wurde, obwohl GPS-Tracker üblicherweise nur selten und nur geringe Datenmengen übertragen.

Nachteilig bei den bekannten GPS-Trackern ist das Erfordernis, einen Mobilfunkvertrag mit SIM-Karte für den Betrieb des GPS-Trackers bei einem Mobilfunkanbieter abzuschließen, was relativ hohe Kosten und Mindestvertragslaufzeiten nach sich zieht. Zudem verbrauchen die Drahtloskommunikationsmodule der bekannten GPS-Tracker sehr viel Energie, so dass die Energiemodule in der Regel bereits nach wenigen Tagen wieder aufgeladen werden müssen (z.B. Wechsel von Batterie, Aufladen von Akkumulator). Somit ist der Unterhalt der bekannten GPS-Tracker aufwendig und teuer.

Zudem besteht ein relativ hohes Risiko, dass das Energiemodul des GPS-Trackers nicht mehr ausreichend Energie zur Verfügung stellen kann, wenn der GPS-Tracker benötigt wird, bspw. um die aktuelle Position über das Drahtloskommunikationsmodul an einen Nutzer bzw. dessen Endgerät zu übertragen. Ein weiteres Problem der bekannten GPS-Tracker ist deren Anbringung an einem vor Diebstahl zu schützenden Fahrrad. Dies erfolgt aufgrund der Baugrößer bekannter GPS-Tracker in der Regel so, dass die Tracker von außen gut sichtbar sind und von einem Dieb ohne großen Aufwand von dem Fahrrad getrennt werden können. Damit verlieren die bekannten GPS-Tracker ihre Schutzwirkung gegen Fahrraddiebstahl.

Das Hauptproblem bei der Verwendung von derzeit verfügbaren GPS-Trackern ist der hohe Stromverbrauch. Da in Fahrrädern keine Energiespeicher zu Verfügung stehen, muss der GPS-Tracker mit dem im Gerät verbautem Akkumulator betrieben werden. Da diese Akkus bauartbedingt klein sind und somit nur über geringe Energiemengen verfügen, lassen sich nur kurze Einsatzzeiten von wenigen Stunden oder Tagen realisieren. Der Nutzer muss demnach ständig das verbaute Gerät laden und dazu auch aus dem Fahrrad aus- und wieder einbauen. Der Anschluss des GPS-Trackers an einen Fahrraddynamo ist zwar theoretisch möglich, eine durchgängige Einsatzbereitschaft des GPS-Trackers setzt dann aber auch einen permanenten Betrieb, d.h. Bewegung des Fahrrads voraus. Dies ist jedoch nicht praktikabel.

Auch beim Einsatz eines bekannten GPS-Trackers an Pedelecs oder S-Pedelecs, die mit großen fahrzeugeigenen Fahr-Akkumulatoren ausgestattet sind, an welche der GPS-Tracker angeschlossen werden kann, wird das Problem nicht befriedigend gelöst, da der Nutzer den Fahr-Akku zum Laden entnehmen kann und weil der Ladestand dieses Fahr-Akkus in der Praxis unterschiedliche Werte annimmt, d.h. auch so entladen sein kann, dass ein dauerhafter Betrieb des GPS-Trackers nicht möglich ist. Das bedeutet, die Verfügbarkeit des GPS-Trackers und Zuverlässigkeit im Diebstahlfall hängt vom Ladestand des Pedelec-Akkus ab.

Schließlich basiert die aktuelle Gerätegeneration der bekannten GPS-Tracker auf den Mobilfunkstandards 2G, 3G oder 4G. Die Frequenzen für die veralteten Standards 2G und 3G wurden in einigen Ländern (z.B. in der Schweiz) bereits abgeschaltet und werden in naher Zukunft auch in anderen Ländern wie Deutschland abgeschaltet werden. Die aktuelle Generation von bekannten GPS-Trackern wird in naher Zukunft in Deutschland und den restlichen EU-Ländern nicht mehr funktionieren.

Darüber hinaus sind aus dem Stand der Technik Geräte bekannt, welche die Bluetooth-Beacon-Technologie zur Nahbereichsortung verwenden (z.B. "tile"-Tracker von der Tile Inc. oder "AirTag" von Apple Inc.). Diese bauen aber auf einem proprietären Netzwerk aus Endgeräten (z.B. bei Apple iPhones, iPads und MacBooks) zur Fernbereichslokalisierung auf. Das hat den Nachteil, dass die Ortung nur in unmittelbarer Nähe (im Bereich <10 m) zu einem Endgerät erfolgen kann.

Das Transportmittel Fahrrad erlangt insbesondere in wachsenden urbanen Ballungszentren immer größere Bedeutung. Der Trend verlagert sich dabei weg vom Auto hin zum Fahrrad. Die Integration von elektrischen (E-)Antrieben in Fahrräder zu sogenannten E-Bikes, Pedelecs und S-Pedelecs hat diesen Trend weiter beschleunigt. Fahrräder mit E-Antrieb ermöglichen ein ermüdungsfreies und schnelles Vorankommen im alltäglichen Verkehr. S-Pedelcs mit einer Spitzengeschwindigkeit von 45km/h werden immer häufiger anstelle eines Autos als "daily commuter" zum Weg zur Arbeitsstätte oder für alltägliche Besorgungen genutzt.

Der Stellenwert des Fahrrads in postindustriellen, hochentwickelten Ländern (z.B. Schweiz, Deutschland, Niederlande, Dänemark, Österreich, etc.) hat in den letzten Jahren ein Paradigmenwechsel durchlaufen. Verbraucher schreiben dem Fahrrad heutzutage einen mit dem Auto vergleichbaren Nutzungswert und Status zu und sind dabei bereit, hohe Geldbeträge für hochwertige und technisch aufwendig ausgestattete Fahrräder zu investieren.

Mit diesem Aufwärtstrend des Fahrrads ist auch das Problem des Fahrraddiebstahls verknüpft. Diebe haben im Jahr 2018 allein in Deutschland rund 160.000 versicherte Fahrräder gestohlen und einen Gesamtschaden von etwa 100 Mio. Euro verursacht. Für jedes gestohlene Fahrrad zahlten Versicherer im Schnitt 630 Euro. Das geht aus einer Statistik des Gesamtverbandes der Deutschen Versicherungswirtschaft (GDV) hervor.

Der Trend zu teuren Fahrrädern als Diebesgut ist ungebrochen: Vor zehn Jahren betrug die Entschädigung für ein gestohlenes Fahrrad im Schnitt noch 370 Euro, im Jahr 2017 schon 570 Euro und 2018 waren es bereits 630 Euro. 2017 zahlten die Versicherer für 160.000 gestohlene Fahrräder noch insgesamt 90 Millionen Euro. Ein Jahr später waren es bereits 100 Millionen Euro.

Die Zahl der Diebstähle insgesamt - versicherte und nicht versicherter Fahrräder - lag 2018 laut Polizeilicher Kriminalstatistik bei rund 292.000, etwa 3% weniger als im Jahr zuvor. Da Fahrraddiebstähle häufig nicht zur Anzeige gebracht werden, ist von einer hohen Dunkelziffer auszugehen. Zum Vergleich: Alle deutschen Privathaushalte zusammen verfügen nach Angaben des Statistischen Bundesamts über rund 69 Millionen Fahrräder.

Insbesondere teure, hochwertige Fahrräder werden überproportional häufig gestohlen und führen bei Dieben zu einer hohen intrinsischen Motivation und Risikobereitschaft.

Ausgehend von dem beschriebenen Stand der Technik liegt der vorliegenden Erfindung die Aufgabe zugrunde, eine einfach zu unterhaltende und kostengünstige Möglichkeit zu schaffen, Fahrräder wirksam vor Diebstahl zu schützen.

Zur Lösung dieser Aufgabe wird ein Gerät zur Ortung eines Fahrrads mit den Merkmalen des Anspruchs 1 vorgeschlagen. Insbesondere wir ein Gerät der eingangs genannten Art vorgeschlagen, das von außen unsichtbar im Inneren einer Stange oder eines Rohrs des Fahrrads angeordnet und dort vorzugsweise befestigt ist, wobei die Stange oder das Rohr insbesondere eine Sattelstange, ein Gabelsteuerrohr, ein Rahmenrohr oder ein Lenkerrohr des Fahrrades umfasst.

Somit wird ein kleines, kompaktes, batteriebetriebenes Gerät vorgeschlagen, das fest, verborgen und dauerhaft mit dem Fahrrad verbunden ist und mit dessen Hilfe zu vorgebbaren Zeitpunkten eine Ortung des Fahrrads möglich ist. Zu diesem Zweck ist das Gerät mit dem Ortungsmodul ausgestattet, das bspw. einen Satellitennavigations-Empfänger umfasst. Der Empfänger kann bspw. Signale von Satelliten eines GPS-, Galileo-, GLONASS-, Compass- und/oder Beidou-Navigationssatelliten-Netzwerks empfangen. Anhand von Zeitstempeln der von verschiedenen Satelliten eines Navigationssatelliten-Netzwerks empfangenen Signale und einem Vergleich mit dem tatsächlichen Empfangszeitpunkt der Signale durch den Satellitennavigations-Empfänger kann das Ortungsmodul die Entfernung zu den einzelnen Satelliten und ferner die aktuelle Position auf der Erdoberfläche mit einer Genauigkeit von wenigen Metern berechnen.

Die Ortung des Fahrrads mittels des Navigationssatelliten-Netzwerks kann durch unterschiedliche Verfahren überprüft, verifiziert oder optimiert werden. Denkbar wäre bspw. eine zusätzliche Mobilfunk-Triangulation oder eine WLAN-Lokalisation oder die Nutzung (bzw. Auswertung) von Bluetooth (-Verbindungsinformationen), um die Genauigkeit der Ortung zu verbessern und eine zuverlässige Ortung auch in Innenräumen (z.B. Fahrradkeller, Garage, etc.) zu ermöglichen.

Das Energiemodul des Geräts umfasst mindestens eine Batterie und/oder mindestens einen wieder aufladbaren Akkumulator. Im Falle eines Fahrrads in Form eines E-Bikes oder Pedelecs kann das Gerät zur Energieversorgung an den Fahr-Akku des Fahrrads angeschlossen sein. In diesem Fall würde das Energiemodul die Elektrik zum Anschluss an den Fahr-Akku umfassen. Eine zusätzliche Batterie oder ein Akku könnten als Energiezwischenspeicher fungieren, um eine kurzzeitige Unterbrechung der Energieversorgung von dem Fahr-Akku zu überbrücken. Es wäre aber auch denkbar, dass eine Batterie und/oder ein Akku des Energiemoduls die gesamte Energie zum Betrieb des Geräts zur Verfügung stellt, wobei dann der Anschluss an einen Fahr-Akku des Fahrrads entfallen kann. Aufgrund der besonderen Architektur des Geräts hat es einen so niedrigen Energieverbrauch, dass die Batterie- oder Akkulaufzeit erheblich verlängert werden kann, bevorzugt auf mehrere Monate, besonders bevorzugt sogar auf mehrere Jahre.

Bevorzugt umfasst das Energiemodul des Geräts Lithium Polymer (LiPo oder LiFePo) Akkumulatoren mit sehr hoher Energiedichte in standardmäßig verfügbaren Formaten, wie z.B. 18350, 18650 oder 21700. Dadurch wird dem Aspekt der Nachhaltigkeit und einer langen Produktlebensdauer in besonderem Maße Rechnung getragen, weil der Nutzer diese Zellen, die über Jahre der Verwendung einer gewissen Alterung und somit Leistungseinbuße unterliegen, selber ausbauen und tauschen kann. Bei LiPo-Akkus wird eine festere Polymerbasis als Elektrolyt statt eines flüssigen Elektrolyten verwendet. Eine Besonderheit an LiPo-Akkus ist, dass sie in vielen verschiedenen Formen hergestellt werden können. Bei einer sehr hohen Leistung und Lebensdauer hat ein LiPo-Akku ein sehr geringes Gewicht. Positiv ist auch die sehr geringe Selbstentladung des LiPo-Akkus. Wenn der LiPo-Akku richtig gelagert und geladen wird, weist er je nach Nutzung außerdem eine sehr hohe Lebensdauer auf.

Geeignete Akkumulatoren für das Energiemodul werden durch große Hersteller massenhaft hergestellt. Sie sind leicht verfügbar, kostengünstig und von hoher, gleichbleibender Qualität und Lebensdauer. Es wäre bspw. denkbar, in einer standardmäßigen Sattelstange das erfindungsgemäße Gerät mit seiner Hardware und 3 Stück LiPo-Akkus vom Typ 21700 mit einer Gesamtkapazität von 15 Ah unterzubringen. Bei einem Ruhestromverbrauch der Hardware von durchschnittlich 20 µA ergibt sich rein rechnerisch eine Batterielebensdauer von etwa 85 Jahren, wenn das Fahrrad nicht genutzt wird und das Gerät nur im Standby-Modus mit minimalem Energieverbrauch betrieben wird.

Der bestmögliche, weil anwenderfreundlichste, Nutzungsfall wäre, wenn der Verbraucher das Gerät einmalig in seinem Fahrrad installiert und danach nie wieder ausbauen müsste, um das interne Energiemodul wieder aufzuladen.

Das erfindungsgemäße Gerät verbraucht durch optimierte Hardware und speziell entwickelte Software-Algorithmen der Firmware, welche die Hardware steuert, im Standby- bzw. Normalbetriebs-Modus extrem wenig Strom. Durch die Kombination von speziell entwickelter Software und Hardware mit extrem niedrigem Stromverbrauch einerseits und Energiemodulen mit hoher Energiedichte andererseits, kann das erfindungsgemäße, im Fahrrad verbaute Gerät für ein Jahr und mehr in dem Fahrrad verbleiben, ohne dass das im Gerät verbaute Energiemodul nachgeladen oder ausgetauscht werden muss. Diese Tatsache bringt einen sehr hohen Nutzwert und damit auch Mehrwert für den Verbraucher.

Die bekannten GPS-Tracker der alten Generation mussten an eine Fahrzeugbatterie angeschlossen werden und brauchten diese innerhalb weniger Tage oder Wochen durch ihren hohen Energieverbrauch auf. Diese GPS-Tracker waren mit Puffer-Batterien oder -Akkus ausgestattet, welche nach Trennung des GPS-Trackers von der Fahrzeugbatterie den weiteren Betrieb nur wenige Stunden aufrechterhalten konnten.

Das erfindungsgemäße Gerät ist außerdem ausgebildet, die Informationen über die ermittelte (bevorzugt aktuelle) Position des Geräts (und damit in der Regel auch des Fahrrads, an dem das Gerät angebracht ist) mittels einer Funkverbindung an einen Nutzer zu übertragen. Die Übertragung an den Nutzer bzw. dessen Endgerät kann direkt, bspw. über eine WLAN-, Bluetooth- oder NFC-Verbindung, oder aber indirekt, bspw. über einen Internet- oder Netzwerk-Server, erfolgen, zu dem sich der Nutzer mit seinem Endgerät Zugang verschaffen muss.

Für die Informationsübertragung an einen Server können verschiedene Mobilfunkstandards zum Einsatz kommen. Besonders bevorzugt ist es jedoch, wenn das Drahtloskommunikationsmodul zum Aussenden von Daten mit Informationen über die ermittelte Position des Fahrrads über ein Low Power Wide Area Network (LP WAN oder LPN)-Drahtloskommunikationsnetzwerk ausgebildet ist. LP WAN beschreibt eine Klasse von Netzwerkprotokollen zur Verbindung von Niedrigenergieendgeräten, wie bspw. das erfindungsgemäße batteriebetriebene Gerät, mit einem Server. Das Protokoll ist so ausgelegt, dass eine große Reichweite und ein niedriger Energieverbrauch der Endgeräte bei niedrigen Betriebskosten erreicht werden kann. Das LP WAN-Netzwerk besteht aus Endgeräten und Gateways (auch Basisstationen genannt), die Daten zwischen den Endgeräten und einem oder mehreren Netzwerkservern weiterleiten. Die Server steuern die Endgeräte und werten die empfangenen Daten aus. In dem vorliegenden Fall wäre es bspw. denkbar, dass ein Netzwerkserver die von dem Gerät empfangenen Positionsdaten des Fahrrads für einen Nutzer, bspw. den Besitzer des Fahrrads, zugänglich vorhält. Die physikalische Verbindung zwischen Endgeräten und Gateways kann über lizenzfreie Frequenzen des Radiospektrums (z.B. ISM-Band, White Space) oder Mobilfunkfrequenzen erfolgen. Die Verbindung zwischen Gateways und Netzwerkserver kann bspw. über IP-Verbindungen erfolgen.

Es wird vorgeschlagen, für das erfindungsgemäße Gerät den IoT (Internet of Things)-Standard für die Datenübertragung zu verwenden. Insbesondere wird vorgeschlagen, dass das Drahtloskommunikationsmodul zum Aussenden von Daten mit Informationen über die ermittelte Position des Fahrrads über ein Narrowband-Internet of Things-(NB IoT)- oder ein Long Term Evolution for Machines (LTE-M)-Drahtloskommunikationsnetzwerk ausgebildet ist. Bei den beiden Standards NB IoT und LTE-M handelt es sich um zwei Möglichkeiten zur Datenübertragung über ein LP WAN-Netzwerk. Sowohl LTE-M als auch NB-IoT basieren auf einer (zellulären) Mobilfunktechnologie und sind so konzipiert, dass sie sich besonders gut für die globale loT-Konnektivität eignen. LTE-M und NB-IoT sind beides Verbindungstechnologien, welche die Vorteile der LP WAN-Technologie (Low Power Wide Area Networks) nutzen, welche die Akkulaufzeit von Geräten erhöht und Geräte verbindet, die bisher schwer zu erreichen waren. Beide Technologien sind heute verfügbar, standardisiert und basieren auf dem 4G-Netz (LTE), was bedeutet, dass sie zukunftssicher sind, über eine globale Netzabdeckung verfügen und durch GSMAund Telekommunikationsstandards unterstützt werden.

LTE-M (auch LTE-MTC oder LTE Cat M) ist eine LP WAN-Technologie, die von 3GPP (3rd Generation Partnership Project) entwickelt wurde, um Geräte und Dienste speziell für IoT-Anwendungen zu ermöglichen. LTE-M bietet eine Datenrate von 1 Mbps für 3GPP Release 13, bis zu 4 Mbps für Release 14. Die Akkulaufzeit wird durch die Reduzierung der Funkkommunikation zwischen Gerät und Netzwerk erhöht, und die Geräte können in den Ruhezustand gehen oder das Netzwerk weniger oft abhören. LTE-M und NB-IoT bieten beide eine bessere Abdeckung als 4G, z. B. in tief im Gebäudeinneren liegenden Räumen oder in abgelegenen Gebieten. Da das Gerät zur Ortung eines Fahrrads keine sofortige Verfügbarkeit haben muss, kann die Akkulaufzeit durch geeignete Maßnahmen erheblich gesteigert werden. Als Diebstahlschutz kann es bspw. ausreichend sein, wenn das Gerät die Positionsdaten in relativ langen zeitlichen Abständen (z.B. alle 30 min) oder erste nach Eintritt eines bestimmten Ereignisses (bspw. einer Bewegung des Fahrrads, einer Annäherung und erfolgreichen Authentifizierung eines Endgeräts eines Nutzers) übermittelt. Um dies zu nutzen, ist der Zugriff auf neue Arten von Funktionen im Netzwerk erforderlich, z.B. PSM (Power Save Mode) und eDRX (extended Discontinuous Reception).

Um das Nutzererlebnis zu maximieren und zeitgemäß zu gestalten, wird vorgeschlagen, dass das erfindungsgemäße Gerät in eine IT-Infrastruktur eingebunden ist. Diese Infrastruktur besteht bspw. aus einem sog. Backend mit Mobilfunk-loT-Anlaufknoten, Zwischenspeicher und Rechnerkapazität zur Verarbeitung der einkommenden Daten und einem sog. Frontend in Form einer Applikation (Computerprogram oder App), die auf einem mobilen Endgerät (z.B. Smartphone oder Tablet-PC) abläuft, oder einer Netzwerkseite (Website oder Webpage), die auf einem Internetbrowser eines Endgeräts (z.B. Smartphone, Tablet-PC, Laptop-PC oder Desktop-PC) dargestellt wird.

Das Frontend ist bevorzugt über eine SSL-Verschlüsselung mit dem Backend verbunden. Im Frontend werden relevante Daten aus dem Backend dem Nutzer, bevorzugt in grafisch ansprechender Weise, präsentiert. Das Frontend dient somit als Schnittstelle zwischen Nutzer und den Daten bzw. dem erfindungsgemäßen Gerät.

Aufgrund des sich von herkömmlichen Telekommunikationsanwendungen unterscheidenden Verkehrsprofils, das mit der loT-Konnektivität einhergeht, bieten Mobilfunkanbieter besonders günstige Preismodelle für LTE-M und NB-IoT an. Ein LTE-M- und NB-IoT-Geräte sendet nur geringe Datenmengen. Dadurch können die Unterhaltskosten für das Ortungsgerät reduziert werden.

Die Tarifierung von IoT-Geräten erfolgt zumeist auf Grundlage eines festen Datenvolumens von beispielsweise 500 MB. In diesem Zusammenhang können in die Herstellungskosten für das Gerät gleich die Kosten für ein festes Datenkontingent eingeschlossen werden.

Aufgrund von speziellen Softwarefiltern und Datenkompressionsalgorithmen und eines sparsamen, für IoT-Geräte optimierten Datenverbrauchs oder einer Kombination davon, ergibt sich bei bestimmungsgemäßer Verwendung des Geräts eine Nutzungsdauer von bis zu 6 Jahren und länger bis das Datenkontingent aufgebraucht ist und vom Nutzer nachgekauft werden muss. Demzufolge entsteht ein hoher Mehrwert für den Nutzer, weil er keinen Mobilfunkvertrag abschließen und keine Prepaid SIM-Karte kaufen und aufladen muss und das erfindungsgemäße Gerät somit ohne zusätzlichen Aufwand und ohne zusätzliche Mobilfunkkosten direkt nutzen kann.

Zudem verwenden LTE-M und NB-IoT beide vereinfachte Versionen von regulärem 4G, was die Komplexität der Hardware und die Kosten der Geräte weiter reduziert. Bevorzugt umfasst das erfindungsgemäße Gerät ein Drahtloskommunikationsmodul, das mindestens einen der genannten Standards, vorzugsweise jedoch sowohl LTE-M als auch NB-IoT, unterstützt. Eine Logik in dem Gerät, die in einem Verarbeitungsmodul des Geräts realisiert sein kann, kann bspw. je nach Anwendungserfordernis einen der beiden Standards auswählen, der für die aktuelle Datenübertragung besser geeignet ist. Die Auswahl kann bspw. in Abhängigkeit von Kommunikationsparametern (z.B. von der Anzahl der durch das Datenkommunikationsmodul erreichbaren Basisstationen oder von der Signalstärke von Signalen, die von dem Gerät an die Basisstationen ausgesandt oder durch das Gerät von den Basisstationen empfangen werden) und/oder in Abhängigkeit von geräteinternen Parametern (z.B. von den Positionsdaten des Fahrrads) erfolgen.

Das Verarbeitungsmodul des Geräts kann je nach Bedarf im Einsatzfall zwischen den beiden Standards a) und b) wechseln:
a) LTE-M: schnell, hohe Frequenz, hohe Bandbreite, wird durch Materie wie Wände leicht abgeschirmt, Verwendung insbesondere zur maschinenbasierten Kommunikation zwischen Fahrzeugen im Verkehr im Rahmen des autonomen Fahrens; sog. Car-to-Car- oder Car-to-X-Kommunikation;
b) NB-IoT: langsam, niedrige Frequenz, niedrige Bandbreite, gute Penetration von Materie, geht durch dicke Wände, Verwendung insbesondere bei Stromzählern der neuesten Generation.
Der größte Vorteil der Verwendung der loT-Technologien LTE-M und NB-IoT gegenüber der herkömmlichen älteren Mobilfunkgeneration (2G, 3G, 4G) ist dabei der um Größenordnungen niedrigere Stromverbrauch des Geräts.

NB-IoT ist ein Funkstandard, der bei der Vernetzung von Geräten im Internet der Dinge (IoT) zum Einsatz kommt. Während das normale Mobilfunknetz eine hohe Datenübertragung in kurzer Zeit ermöglicht, ist der Fokus im umgekehrt. Hier werden kleine Datenmengen, die nur selten übertragen werden müssen, versendet. Das führt zu einer sehr guten Netzabdeckung bei niedrigem Energiebedarf. So können beispielsweise auch in schwer zugänglichen Arealen (z. B. Kellerräume) Daten via NB-IoT übertragen werden.

Die Basis von NB-IoT ist der 3GPP-Standard, eine weltweite Standardisierung der Funk-Technologie für GSM (2G), UMTS (3G), LTE (4G) und NGN (5G). Somit arbeitet NB-IoT nicht in einem separaten Netz, sondern greift auf die Frequenzbereiche der bestehenden Mobilfunknetze zu. Der Frequenzbereich, in dem NB-IoT hauptsächlich technisch realisiert wird, beträgt 900 MHz und 800 MHz im GSM- oder LTE-Netz. Diese langwelligen Signale bei niedriger Frequenz sorgen dafür, dass z.B. dicke Betonwände besser durchdrungen werden können als es für das hochfrequente LTE-Signal mit 1.800 MHz oder gar 2.600 MHz möglich wäre. Da NB-IoT und LTE (als Vertreter des aktuellen Mobilfunknetzes) in verschiedenen Frequenzbändern arbeiten, können die Standards problemlos parallel betrieben werden, ohne sich gegenseitig einzuschränken.

Zur Datenübertragung nach dem NB-IoT-Standard wird vorzugsweise eines der Frequenzbänder B8 (900 MHz; Uplink Band: 880 - 915 MHz; Downlink Band: 925 - 960 MHz; Bandbreite: 25 MHz) und B20 (800 MHz; Uplink Band: 832 - 862 MHz; Downlink Band: 791 - 821 MHz; Bandbreite: 30 MHz) genutzt. Auch andere Frequenzbänder können genutzt werden, bspw. B3 (1.800 MHz; Uplink Band: 1.710 - 1.785 MHz; Downlink Band: 1.805 - 1.880 MHz; Bandbreite: 75 MHz).

Das Netzwerkprotokoll, auf dem die Funktionalität von NB-IoT basiert, nennt sich LPWA (Low Power Wide Area). Low Power drückt dabei den minimalen Energieverbrauch aus, der bei NB-IoT anfällt. Wide Area betont, dass NB-IoT-Signale auch Stellen und Gebiete erreichen, die mit hochfrequenten Mobilfunksignalen nicht zugänglich wären. Auch an Orten mit vielen massiven Betonwänden wie Städten oder unterirdischen Räumen wie Keller können durch NB-IoT Daten gesendet werden.

Anders als im normalen Mobilfunknetz (z.B. LTE) hat NB-IoT eine etwa zehnfach bessere Netzabdeckung, weil zum einen Reichweite und Signalstärke besser sind und zum anderen die Komplexität des Funkmoduls und die maximalen Übertragungsraten in Sende- und Empfangsrichtung eingeschränkt sind.

Wichtige Vorteile von NB-IoT gegenüber herkömmlichen hochfrequenten Mobilfunknetzen (z.B. LTE) sind bspw. die große Anzahl an Teilnehmern (vernetzte Geräte) pro Funkzelle. NB-IoT ermöglicht die Adressierung von bis zu 50.000 Teilnehmern. Ein weiterer Vorteil liegt in der hohen Reichweite. Die Spezifikationen von NB-IoT ermöglichen es, die Signalreichweite auf über 10 km zu steigern. Dadurch können auch entlegene Orte, an denen das normale Mobilfunksignal nicht ankommen würde, erreicht werden. Ein anderer Vorteil liegt in den geringen Kosten für die Übertragung von Daten mit NB-IoT. Ein Grund dafür ist, dass es in Fällen eingesetzt wird, wo eine kleine Menge an Daten nur seltenen gesendet werden muss. Ein NB-loT-Modul kann mit einer handelsüblichen AA-Batterie bis zu 10 Jahre auskommen, ohne dass das Modul gewartet werden muss. Für das entsprechende Ortungsgerät ergeben sich Laufzeiten von bis zu 5 Jahren oder mehr, ohne dass das Energiemodul ausgetauscht werden müsste. Auch die Produktion von NB-IoT-Modulen bzw. entsprechender Ortungsgeräte selbst ist kostengünstig und lässt sich im großen Rahmen realisieren. Die Hardware der Geräte ist größtenteils in Halbleitertechnologie und hochintegriert realisiert.

Das erfindungsgemäß vorgeschlagene Gerät ist durch verschiedene vorteilhafte Maßnahmen in besonderer Weise für den Einsatz zur Ortung von Fahrrädern geeignet. Insgesamt ergibt sich ein unbemerkt auch nachträglich in das Fahrrad integrierbares, besonders kostengünstiges, wartungsarmes und zuverlässiges Ortungsgerät.

Das Gerät ist mit Satellitenortung (z.B. GPS), einer Mobilfunkverbindung (z.B. GSM) und einer Nahbereichskommunikationsverbindung oder LP WAN-Verbindung (z.B. WiFi oder WLAN) durch Triangulation für die Fernlokalisierung sehr gut geeignet, unabhängig von der Anwesenheit anderer Endgeräte (z.B. wie bei "tile" oder "AirTag") in der Nähe. Somit ist eine Ortung des Geräts auch fernab von Ballungsräumen bspw. in ländlichen Gebieten problemlos möglich. Zusätzlich kann eine andere Nahbereichskommunikationsverbindung (z.B. BlueTooth) zur Ortung im Nahbereich, zur Plausibilitätsprüfung und/oder zur Verbesserung der Genauigkeit der Ortung verwendet werden.

Vorzugsweise ist das Gerät ferner ausgebildet (bspw. anhand von Erschütterungen) zu erkennen, ob das Fahrrad bewegt wird. Zu diesem Zweck kann es vorteilhaft sein, wenn das Gerät ein Sensormodul aufweist, das bspw. einen Beschleunigungssensor (sog. G-Sensor) umfasst. Anhand einer einzigen detektierten Erschütterung, die einen vorgebbaren Schwellenwert übersteigt, oder anhand eines vorgebbaren Musters mehrerer detektierter Erschütterungen kann auf eine Bewegung und/oder Inbetriebnahme des Fahrrads geschlossen werden.

Selbstverständlich kann das Sensormodul auch einen oder mehrere andere Sensoren, z.B. einen Temperatursensor, einen Drucksensor, einen Feuchtigkeitssensor o.ä., zur Detektion von Betriebsparametern des Fahrrads und/oder des Geräts und/oder von Umgebungsparametern aufweisen.

Vorteilhafterweise hat das Gerät ein Verarbeitungsmodul, das ausgebildet ist, das Gerät aus einem Standby-Modus mit minimalem Energieverbrauch in einen Normalbetriebs-Modus zu versetzen, in dem das Gerät die volle Funktionsfähigkeit einschließlich Positionsermittlung und Datenaussenden hat. Bei Detektion einer Erschütterung des Fahrrads durch das Sensormodul, so wie sie bei einer bestimmungsgemäßen Nutzung des Fahrrads erzeugt wird, kann das mit dem Sensormodul in Verbindung stehende geräteinterne Verarbeitungsmodul die Geräte-Hardware aus dem Standby-Modus aufwecken und in den Normalbetriebs-Modus versetzen. Vorzugsweise ist das Verarbeitungsmodul ausgebildet, das Gerät aus dem Standby-Modus in den Normalbetriebs-Modus zu versetzen, wenn ein Sensormodul des Geräts eine Beschleunigung detektiert, die oberhalb eines vorgebbaren Beschleunigungsschwellwerts liegt.

Gemäß einer vorteilhaften Weiterbildung der Erfindung wird vorgeschlagen, dass das Gerät ein längliches, hohlzylindrisches Gehäuse mit einem kreisförmigen oder ovalen Querschnitt aufweist, in dem sämtliche Module des Geräts angeordnet sind. Das Gehäuse ist an den Enden des Hohlzylinders verschlossen. Die äußere Form des Gehäuses ist an die Form des Hohlraums in der Stange oder dem Rohr des Fahrrads angepasst und entsprechend ausgestaltet, so dass das Gehäuse - bis auf einen schmalen Luftspalt zwischen Außenfläche des Gehäuses und Innenfläche des Hohlraums - nahezu vollflächig an der Wandung des Hohlraums anliegt. Dadurch kann das fahrzeugspezifisch verfügbare Volumen optimal ausgenutzt werden.

Die in dem Gehäuse untergebrachten Module umfassen das Ortungsmodul, das Drahtloskommunikationsmodul und das Energiemodul. Weitere Module, die in dem Gehäuse angeordnet sein können, umfassen bspw. ein Verarbeitungsmodul, ein Sensormodul und/oder ein Alarmmodul. Das Verarbeitungsmodul umfasst bspw. eine Recheneinheit (z.B. einen Mikroprozessor oder Mikrocontroller), auf der ein Computerprogramm (z.B. Firmware und/oder Software) abläuft, und/oder eine Speichereinheit (z.B. ROM, EPROM, EEPROM, RAM, o.ä.). Das Alarmmodul umfasst bspw. eine oder mehrere Einheiten zur Erzeugung und Ausgabe eines akustischen Alarms.

Das Gehäuse kann aus Kunststoff, Metall oder einem Verbundwerkstoff bestehen. Es ist vorzugsweise staub- und feuchtigkeitsdicht verschlossen. Es kann verschließbare Öffnungen aufweisen, bspw. zur Wartung der Module im Inneren des Gehäuses, insbesondere zum Austausch des Energiemoduls. Aus dem Gehäuse kann ein Kabel herausgeführt sein, das zum Anschluss des Geräts an eine oder mehrere externe Einheiten, bspw. in Form eines Zusatzakkus, eines Fahrakkkus eines E-Bikes oder Pedelecs, eines Netzgeräts, eines Ladegeräts zum Aufladen des Energiemoduls, eines Diagnosegeräts zur Funktionsprüfung des Geräts, eines Programmiergeräts zum Update von Firm- oder Software oder zum Einstellen von Betriebsparametern des Geräts, o.ä., ausgebildet ist.

Für den Einsatz in Fahrrädern wird vorgeschlagen, nicht genutztes Volumen im Fahrradrahmen oder anderen Stangen oder Rohren des Fahrrads für die Installation des Geräts zu nutzen. Besonders bietet sich hierbei das Innere der Sattelstange, des Lenkerrohrs, des Rahmenrohrs oder des Gabelsteuerrohrs an. Sattelstangen sind bspw. in unterschiedlichen Durchmessern und Längen verfügbar. Um die Größenordnung des zur Verfügung stehenden Volumens innerhalb der Sattelstange zu veranschaulichen, wird von einer durchschnittlichen Mountainbike-Sattelstange ausgegangen. Diese hat eine innere freie Länge von ca. 400 mm und einen Innendurchmesser von ca. 24,5 mm. Im Inneren ergibt sich somit ein frei nutzbares Volumen von knapp 190 cm³. Der Vorteil der Anordnung des Geräts innerhalb einer Sattelstange ist die leichte Zugänglichkeit für den Nutzer bei gleichzeitiger Unsichtbarkeit von außen für einen potentiellen Dieb. Ein unerwünschtes Lösen und Entfernen eines Sattels vom Fahrrad kann dadurch verhindert werden, dass zur Befestigung des Sattels spezielle Sicherheitsschraubklemmen verwendet werden, die nicht ohne weiteres durch Unbefugte gelöst werden können. Zur Anordnung des Geräts in einem Gabelsteuerrohr müsste zunächst das Vorderrad des Fahrrads ausgebaut werden. Dementsprechend müsste ein Dieb zum Entfernen des Geräts zunächst das Vorderrad ausbauen. Auch bei der Integration des Geräts in das Lenkerrohr stellt die Entnahme des Geräts durch einen Dieb einen nicht kalkulierbaren Zeitaufwand und somit ein großes Risiko dar.

Gemäß einer bevorzugten Ausführungsform der Erfindung wird vorgeschlagen, dass das Gerät einen in einem Gehäuse des Geräts integrierten mechanischen Spannmechanismus zur Befestigung des Geräts im Inneren der Stange oder des Rohrs des Fahrrads aufweist, wobei zumindest zum Lösen des Spannmechanismus ein Werkzeug erforderlich ist. Besonders bevorzugt ist es, wenn der Spannmechanismus nur mit einem speziellen, geräteindividuellen Werkzeug gelöst werden kann.

Manipulationsversuchen eines potentiellen Diebs kann weiter entgegengetreten werden, indem das Gerät mit einem Mechanismus ausgestattet wird, der es dem Nutzer durch Anziehen einer Spannschraube oder auf andere Weise ermöglicht, das Gerät dauerhaft im Inneren der Sattelstange/ des Lenker-/ Rahmen-/ Gabel-Rohres nach Art eines Spreizdübels festzukrallen. Das Gerät kann relativ einfach durch den Nutzer durch Lösen der Spannschraube wieder entnommen werden. Vorteilhafterweise ist die Spannschraube als eine Sicherheitsschraube ausgebildet. Somit benötigt ein potentieller Dieb genau das passende Werkzeug (Schrauben Bit), um die Spannschraube zu lösen und das Gerät entfernen zu können. Die Wahrscheinlichkeit, dass ein potentieller Dieb das Gerät spontan vom Fahrrad trennen und/oder manipulieren kann, kann als sehr gering angesehen werden.

Gemäß einer vorteilhaften Weiterbildung der Erfindung wird vorgeschlagen, dass das Energiemodul eine aufladbare Batterie aufweist und dem Gerät eine Stromerzeugungsvorrichtung, insbesondere in der Form eines Lineardynamos, zugeordnet ist, welche während eines Betriebs des Fahrrads Strom zum Aufladen der Batterie generiert. Alternativ oder zusätzlich kann der Strom auch direkt zum Betrieb des Geräts bzw. von dessen Modulen genutzt werden. Der Lineardynamo kann innerhalb des Gehäuses des Geräts oder aber auch außerhalb des Gehäuses angeordnet sein, und über ein Kabel an dem Gerät bzw. dessen Energiemodul angeschlossen sein.

Der Lineardynamo kann einen starken, bspw. zylindrisch geformten Magneten (z.B. aus Neodym) umfassen, der an einer Feder befestigt ist und durch seine Gewichtskraft in einem Führungsrohr vertikal auf und ab schwingen kann. Konzentrisch zum Schwingungsweg des Magneten ist eine Spule derart angeordnet, dass bei der der vertikalen auf und ab Bewegung des Magneten in der Spule ein Strom induziert wird, der zum Laden des geräteinternen Energiemoduls (Akkumulator) genutzt werden kann. Diese Konstellation funktioniert bei der Integration des erfindungsgemäßen Gerätes in ein vertikal angeordnetes Sattel- oder Gabelsteuerrohr besonders gut, wobei die bei der Nutzung und dem Betrieb des Fahrrads auftretenden Erschütterungen genutzt werden, um den Magneten in eine lineare, vertikale auf und ab Bewegung zu versetzen und den Akku somit aufzuladen.

Ferner wird vorgeschlagen, dass das Energiemodul eine aufladbare Batterie aufweist, die von außerhalb des Fahrrads berührungslos, insbesondere induktiv über eine Ladespule, aufgeladen werden kann. Die Ladespule ist vorzugsweise in das Gerät integriert. Mit Hilfe der Ladespule kann das geräteinterne Energiemodul (Akkumulator) von außen, induktiv durch das Material des Rohrs oder der Stange des Fahrrads, in dem/ in der das Gerät angeordnet ist, hindurch geladen werden. Somit könnte ein Ladevorgang des internen Akkumulators ohne Ausbau des Gerätes aus dem Fahrrad erfolgen. Auch das Freilegen eines Anschlusskabels des Geräts zum Aufladen des Akkumulators ist nicht erforderlich.

Denkbar wäre es ferner, dass das von außen auf die Ladespule gelegte induktive Ladegerät an dem Rohr oder der Stange des Fahrrads bspw. magnetisch fixiert wird. Das Ladegerät kann über einen Netzanschluss, bspw. in der Form eines Stromkabels mit Stecker, an ein Stromnetz angeschlossen werden und den internen Akkumulator über die Ladespule berührungslos aufladen. Alternativ oder zusätzlich zu dem Netzanschluss könnte das Ladegerät seinerseits mit einem oder mehreren Akkumulatoren ausgestattet sein, um den Ladevorgang des geräteinternen Akkumulators mobil auch ohne Stromnetz vor Ort zu ermöglichen. In diesem Fall würde zunächst der Akkumulator des Ladegeräts an einem festen Ort mit Stromnetz aufgeladen und anschließend vor Ort zum Fahrrad gebracht werden, wo es dann in der Nähe der Ladespule aufgelegt (und möglicherweise befestigt) wird. Dann wird der Ladevorgang des geräteinternen Akkumulators vor Ort durchgeführt. Das Fahrrad kann somit an seinem Ort (z.B. in der Garage, im Fahrradkeller, im Hof, auf der Straße) verbleiben. Das im Fahrrad verbaute erfindungsgemäße Gerät muss nicht ausgebaut werden. Der Mehrwehrt für den Nutzer wäre erheblich.

Gemäß einer anderen vorteilhaften Ausführungsform der Erfindung wird vorgeschlagen, dass das Drahtloskommunikationsmodul zum Aussenden und Empfangen von Daten über eine Wireless Local Area Network (WLAN oder WiFi)-, eine Bluetooth- und/oder eine Near Field Communication (NFC)-Drahtloskommunikationsverbindung ausgebildet ist. Das Drahtloskommunikationsmodul verfügt somit zusätzlich zu dem ersten Sende- und/oder Empfangsmodul für die Datenübertragung zu dem Netzwerkserver über das LP WAN-Drahtloskommunikationsnetzwerk, vorzugsweise nach dem NB-IoT- oder dem LTE-M-Standard, über mindestens ein weiteres Sende- und/oder Empfangsmodul für eine Datenübertragung zu einem Endgerät eines Nutzers oder dergleichen über eine WLAN-, Bluetooth- und/oder NFC- Drahtloskommunikationsverbindung.

Bevorzugt kann eine auf einem Verarbeitungsmodul des Geräts ablaufende Software oder Firmware des Geräts über die WLAN-, Bluetooth- und/oder NFC-Drahtloskommunikationsverbindung aktualisiert werden. Zu diesem Zweck kann bspw. ein mobiles Endgerät oder ein Diagnosegerät über die Drahtloskommunikationsverbindung an das Gerät angebunden werden. Das Update der Software oder Firmware ist auf dem Endgerät oder dem Diagnosegerät abgespeichert oder aber es wird bspw. über das Internet in das Endgerät oder das Diagnosegerät geladen und dann an das Verarbeitungsmodul des Geräts übertragen und dort in einer Speichereinheit abgespeichert.

Alternativ oder zusätzlich können Betriebsparameter des Geräts über die WLAN-, Bluetooth- und/oder NFC-Drahtloskommunikationsverbindung eingestellt werden. Zu diesem Zweck kann bspw. ein mobiles Endgerät über die Drahtloskommunikationsverbindung an das Gerät angebunden werden. Die Einstellung der Betriebsparameter kann bspw. über eine auf dem mobilen Endgerät ablaufende Applikation (Computerprogramm oder App) durch den Nutzer des Endgeräts erfolgen. Das Endgerät ist bspw. als ein Smartphone, ein Tablet-PC, ein Laptop-Computer oder ein Desktop-Computer ausgebildet. Alternativ kann die Anbindung des Endgeräts an das Gerät auch über das LP WAN, insbesondere das Internet, erfolgen. Die Einstellungen der Betriebsparameter werden aus der Applikation an das Verarbeitungsmodul des Geräts übertragen und dort in einer Speichereinheit abgespeichert.

Gemäß einer weiteren Ausführungsform wird vorgeschlagen, dass während eines Betriebs des Fahrrads von dem Ortungsmodul des Geräts ermittelte Positionen des Fahrrads über die WLAN-, Bluetooth- und/oder NFC-Drahtloskommunikationsverbindung an ein mobiles Endgerät eines Fahrers des Fahrrads übertragen werden. Auf diese Weise kann der Fahrer seine Fahrtstrecke tracken (als Fahrtenlog oder Fahrtenbuch oder zur Fahrzeugverwaltung), zu einem späteren Zeitpunkt auswerten oder über Social-Media posten. Zu diesem Zweck läuft auf dem mobilen Endgerät vorzugsweise eine Applikation (Computerprogramm oder App) ab, mit deren Hilfe die Positionsdaten abgespeichert und zu der Fahrtstrecke zusammengesetzt werden. Diese Applikation kann auch zum Auswerten und/oder zum Posten der Fahrtstrecke genutzt werden. Das mobile Endgerät kann ein Smartphone oder ein Tablet-PC sein. Es ist ferner denkbar, dass das mobile Endgerät eines Nutzers als Schlüssel zum Freischalten des Geräts und zur Freigabe des Fahrrads verwendet wird. Auf diese Weise kann unterschieden werden, ob das Fahrrad autorisiert oder unerlaubt verwendet wird. Dazu kann sich das Gerät bei Nichtnutzung des Fahrrads in einem Standby-Modus mit sehr niedrigen Stromverbrauch befinden. Bei der Detektion eines Betriebs des Fahrrads durch das Sensormodul, bspw. anhand von Erschütterungen so wie sie bei einer Nutzung generiert werden, versetzt das Sensormodul oder das Verarbeitungsmodul des Geräts die Hardware in den Normalbetriebs-Modus. Dann versucht das Gerät, eine WLAN-, Bluetooth- oder NFC-Verbindung zu dem Endgerät aufzubauen und dieses zu authentifizieren. Wenn der Verbindungsaufbau und die Authentifizierung des mobilen Endgeräts durch das Gerät erfolgreich sind, wird das Gerät für eine bestimmte Zeitdauer wieder in den Standby-Modus versetzt, um Energie zu sparen.

Falls der Verbindungsaufbau über die WLAN-, Bluetooth- oder NFC-Verbindung oder die Authentifizierung des mobilen Endgeräts nicht erfolgreich ist, kann das Gerät über das LP-WAN eine Verbindung zu dem Backend herstellen. Das Backend prüft zunächst den Standort des mobilen Endgeräts. Ist der Standort nicht bekannt oder die Entfernung des Endgeräts zu dem erfindungsgemäßen Gerät überschreitet eine vorgegebene Grenze (sog. Geofencing), wird das Gerät in den Normalbetriebs- oder Tracking-Modus versetzt und der Nutzer über seine Applikation auf seinem Endgerät informiert, dass sein Fahrrad nicht autorisiert bewegt wird. Der Nutzer kann den Vorgang abbrechen oder das Tracking weiterlaufen lassen, um zu verfolgen, wo sich sein Fahrrad aktuell befindet.

In diesem Sinne wird vorgeschlagen, dass das Gerät ein Verarbeitungsmodul aufweist, das ausgebildet ist, das Gerät nur dann aus einem Standby-Modus mit minimalem Energieverbrauch in einen Normalbetriebs-Modus zu versetzen, in dem das Gerät die volle Funktionsfähigkeit einschließlich Positionsermittlung und Datenaussenden hat, falls ein vorangegangener Datenaustausch mit einem mobilen Endgerät eines Fahrers des Fahrrads über die WLAN-, Bluetooth- und/oder NFC-Drahtloskommunikationsverbindung zu einer erfolgreichen Authentifizierung des Endgeräts geführt hat.

Schließlich wird vorgeschlagen, dass dem Drahtloskommunikationsmodul eine eSIM (embedded Subscriber Identity Module) zugeordnet ist. Herkömmliche aus dem Stand der Technik bekannte GPS-Tracker verwenden eine herkömmliche SIM-Karte, für die ein Nutzungsvertrag (Mobilfunkvertrag) abgeschlossen, oder die - in der Prepaid-Variante - vor der Benutzung mit einem Geldbetrag aufgeladen werden muss. Diese SIM-Karten sind auch in ihrer kleinsten Größenvariante ("Nano"-SIM) noch relativ groß, damit der Verbraucher die SIM-Karte in einen Kartenschlitz des GPS-Trackers einführen bzw. aus dem Schlitz wieder entnehmen kann. Der Kartenschlitz stellt eine Schwachstelle dar, über die Feuchtigkeit und Schmutz in das Geräteinnere eindringen und zu einer Fehlfunktion des Geräts führen kann.

Im Unterschied dazu schlägt die Erfindung vor, eine eSIM zu verwenden, welche als SMD-Bauteil auf einer Platine angeordnet und kontaktiert wird. Die Platine ist Teil des erfindungsgemäßen Geräts. Bevorzugt sind alle Module des Geräts auf der Platine ausgebildet bzw. angeordnet. Auf eine separate Verkabelung in dem Gerät kann dadurch verzichtet werden. Sämtliche elektrischen Verbindungen zwischen den Modulen sind durch Leiterbahnen auf der Platine realisiert. Bevorzugt sind die Module in Halbleitertechnik auf der Platine realisiert. Nach der vollständigen Bestückung der Platine kann diese vollständig umspritzt werden, bspw. im Spritzgussverfahren mit duroplastischem Kunststoff. Dies sorgt für hervorragende Feuchtigkeits- und Staubdichtigkeit sowie für eine hohe Robustheit des Geräts bzw. dessen Elektrik.

Die eSIM ist eine auf einem Halbleiter gespeicherte Identifikationsnummer, welche unabhängig vom Land oder Mobilfunkanbieter verwendet wird. Es besteht somit keine Notwendigkeit für das erfindungsgemäße Gerät die Möglichkeit eines Wechsels für unterschiedliche SIM-Karten vorzusehen. Die eSIM ist ein von der GSM Association standardisiertes Verfahren zur sicheren Einbettung von Teilnehmerinformationen in einem speziellen Modul eines mobilen Endgerätes für Telekommunikation.

Wenn die eSIM einmal in das mobile Endgerät geladen ist, bestehen keine wesentlichen Unterschiede zur Verwendung einer physischen SIM-Karte. Die eSIM ist elektrisch kompatibel mit 2FF- und 3FF-Karten, und sie verwendet das SON-8-Format.

Weitere Merkmale und Vorteile der vorliegenden Erfindung werden nachfolgend anhand der Figuren näher erläutert. Dabei können die in den Figuren gezeigten Merkmale auch jeweils für sich alleine erfindungswesentlich sein, selbst wenn dies in den Figuren nicht gezeigt und in der Beschreibung nicht ausdrücklich erwähnt ist. Ebenso können die einzelnen in den Figuren gezeigten Merkmale auch in beliebiger Weise miteinander kombiniert werden, selbst wenn eine solche Kombination in den

Figuren nicht gezeigt und in der Beschreibung nicht ausdrücklich erwähnt ist. Es zeigen:
- Fig. 1: ein erstes Ausführungsbeispiel eines erfindungsgemäßen elektronischen Ortungsgeräts in einem Längsschnitt;
- Fig. 2: ein zweites Ausführungsbeispiel eines erfindungsgemäßen elektronischen Ortungsgeräts in einem Längsschnitt;
- Fig. 3: ein Fahrrad mit verschiedenen Rohren und Stangen, in denen ein erfindungsgemäßes elektronisches Ortungsgerät angeordnet werden kann;
- Fig. 4: ein weiteres Ausführungsbeispiel eines erfindungsgemäßen elektronischen Ortungsgeräts teilweise in einem Längsschnitt;
- Fig. 5: das in eine Sattelstange eines Fahrrads eingesetzt Ortungsgerät aus Fig. 4;
- Fig. 6: das Ortungsgerät aus Fig. 4 in einem Längsschnitt in einer perspektivischen Ansicht;
- Fig. 7: eine Draufsicht auf das aus der Lenkstange des Fahrrads hervorragende Ende des Ortungsgeräts aus Fig. 5;
- Fig. 8: einen Spannmechanismus des erfindungsgemäßen Ortungsgeräts in einer Seitenansicht;
- Fig. 9: den Spannmechanismus aus Fig. 8 in einem Längsschnitt; und
- Fig. 10: den Spannmechanismus aus Fig. 8 in einer perspektivischen Explosionsdarstellung.

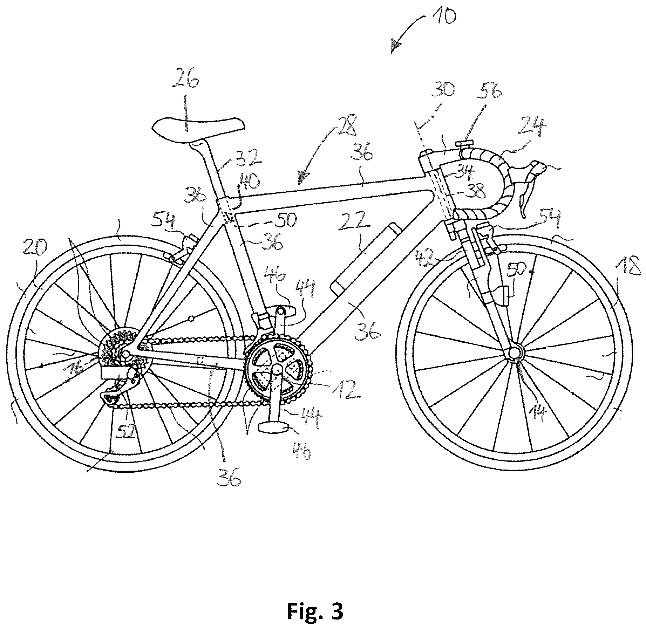

In Fig. 3 ist ein Fahrrad 10 beispielhaft in der Form eines Rennrads dargestellt. In dem gezeigten Beispiel ist das Fahrrad ohne motorischen Antrieb versehen. Es kann jedoch auch mit einem motorischen Antrieb (nicht dargestellt), insbesondere mit einem Elektromotor, als ein sog. Pedelec oder als ein Pedelec-S (E-Bike) ausgerüstet sein. Der Motor kann in einem Tretlager 12 des Fahrrads 10 oder in einer Nabe 14, 16 eines Vorderrads 18 oder eines Hinterrads 20 integriert sein. In dem Tretlager 12 sind über Kurbeln 44 Pedale 46 und ein Zahnkranz 48 drehbar gelagert. Ein Fahrakkumulator 22 kann den für den Vortrieb erforderlichen Strom für den Elektromotor und gegebenenfalls auch Strom für andere elektrische Verbraucher (z.B. Scheinwerfer 50, Leuchten, elektrisch betätigbare Gangschaltung 52, elektrisch betätigbare Bremsen 54, Fahrradcomputer 56, o.ä.) des Fahrrads 10 liefern.

Das dargestellte Fahrrad 10 umfasst zwei Räder 18, 20, von denen das Vorderrad 18 mittels eines Lenkers 24 lenkbar ist. Es könnte jedoch auch drei Räder aufweisen, von denen mindestens eines lenkbar ist. Insbesondere könnte das Fahrrad 10 dann zwei Hinterräder 20 aufweisen. Ferner umfasst das Fahrrad 10 einen Sattel 26 für einen Fahrer des Fahrrads 10. Des Weiteren umfasst das Fahrrad 10 einen Rahmen 28, der die Räder 18, 20, den Lenker 24 und den Sattel 26 hält und gegebenenfalls drehbar oder verschiebbar lagert.

Der Rahmen 28 besteht aus Stangen und/oder Rohren und umfasst insbesondere eine Sattelstange 32, ein Gabelsteuerrohr 34, eines oder mehrere Rahmenrohre 36, ein Lenkerrohr 38 und ein Sattelstangenrohr 40. Die Räder 18, 20 sind jeweils um horizontale, quer zu einer Längserstreckung des Fahrrads 10 verlaufende Drehachsen drehbar gelagert. Der Lenker 24 ist mit seinem Lenkerrohr 38 um eine Drehachse 30 in dem Gabelsteuerrohr 34 drehbar gelagert. Die Drehachse 30 ist bezüglich einer vertikalen Achse etwas nach hinten geneigt. An dem Lenkerrohr 38 ist eine Vorderradgabel 42 befestigt, in der das Vorderrad 18 um die horizontale Drehachse drehbar gelagert ist, sodass das Vorderrad 18 zusammen mit dem Lenker 24 um die nahezu vertikale Drehachse 30 drehbar ist. Der Sattel 26 ist zusammen mit einer Sattelstange 32, an der er befestigt ist, höhenverstellbar in dem Sattelstangenrohr 40 gelagert und in einer bestimmten Höhe an dem Rahmen 28 festlegbar.

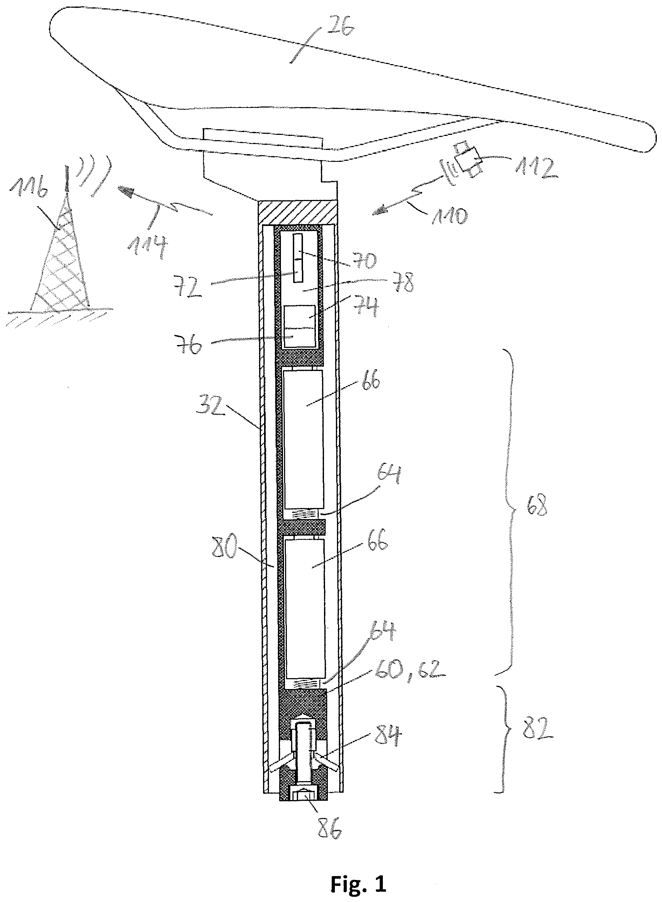

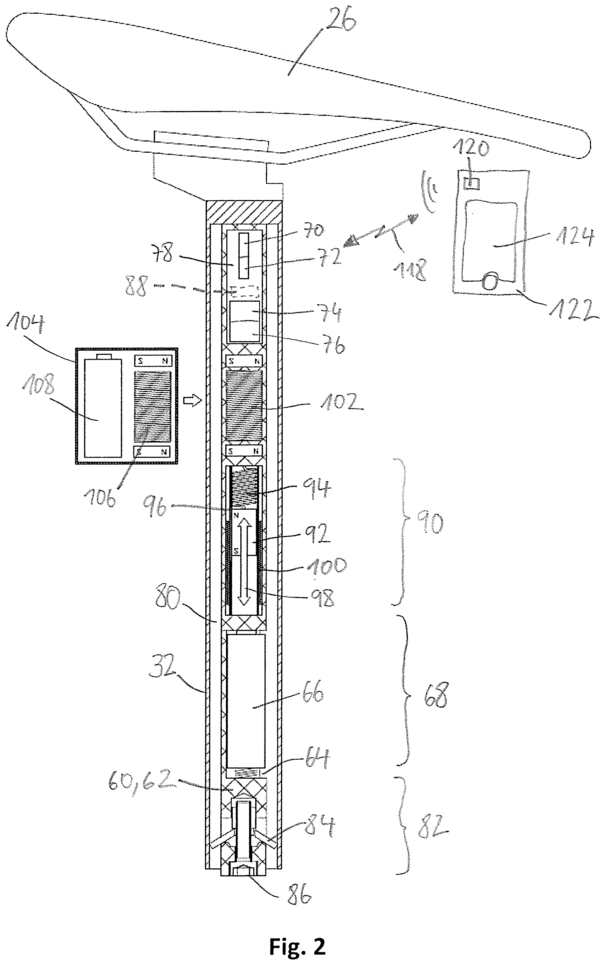

Schließlich umfasst das Fahrrad 10 ein allgemein mit dem Bezugszeichen 60 bezeichnetes Gerät zur Ortung des Fahrrads 10, bspw. im Falle eines Diebstahls oder um eine aktuelle Position oder eine Route des Fahrrads zu ermitteln. Die Ermittlung einer Route des Fahrrads 10 wird auch als Tracking bezeichnet und kann bspw. im Rahmen eines Fitnessprogramms oder für Fahrradkuriere bzw. deren Kunden interessant sein. Das Gerät 60 ist von außen unsichtbar im Inneren einer Stange oder eines Rohrs 32 bis 40 des Fahrrads 10 angeordnet. Nachfolgend wird das Gerät 60 anhand der Fign. 1 und 2 am Beispiel einer Anordnung und Befestigung in der Sattelstange 32 näher erläutert. Die Ausführungen gelten jedoch gleichermaßen auch für eine Anordnung des Geräts 60 in einer der anderen Stangen oder Rohre 32 bis 40 des Fahrrads 10.

In dem Beispiel aus Fig. 1 ist das Gerät 60 in einem oberen Teil der Sattelstange 32 angeordnet. Das Gerät 60 weist ein vorzugsweise hohlzylinderförmiges Gehäuse 62 auf, das in dem Beispiel nicht vollständig geschlossen ist, sondern Öffnungen 64 zum Austausch von Batterien 66 aufweist. Die Batterien 66 können aufladbar in der Form von Akkumulatoren ausgebildet sein. Es können aber auch Einwegbatterien sein, die durch neue ausgetauscht werden müssen, wenn sie leer sind. Die Batterien 66 versorgen die verschiedenen Komponenten des Geräts 60 mit Strom. In Abhängigkeit von einer gewünschten Versorgungsspannung der Komponenten umfassen die Batterien 66 jeweils eine oder mehrere in Reihe und/oder Serie geschaltete Batteriezellen. Der Teil des Geräts 60 mit den Batterien 66 wird als Energiemodul 68 bezeichnet.

Bevorzugt umfasst das Energiemodul 68 des Geräts 60 Lithium Polymer (LiPo oder LiFePo) Akkumulatoren mit sehr hoher Energiedichte in standardmäßig verfügbaren Formaten, wie z.B. 18350, 18650 oder 21700. Der Nutzer kann diese Zellen, die über Jahre der Verwendung einer gewissen Alterung und somit Leistungseinbuße unterliegen, selber ausbauen und tauschen.

Das Gehäuse 62 kann aus Kunststoff, Metall oder einem Verbundwerkstoff bestehen. Es ist vorzugsweise staub- und feuchtigkeitsdicht verschlossen. Die Öffnungen 64 können durch Deckel verschließbar sein. Aus dem Gehäuse 62 kann ein Kabel herausgeführt sein, das zum Anschluss des Geräts 60 an eine oder mehrere externe Einheiten, bspw. in Form eines Zusatzakkus, eines Fahrakkkus 22 eines E-Bikes oder Pedelecs 10, eines Netzgeräts, eines Ladegeräts zum Aufladen des Energiemoduls 68, eines Diagnosegeräts zur Funktionsprüfung des Geräts 60, eines Programmiergeräts zum Update von Firm- oder Software oder zum Einstellen von Betriebsparametern des Geräts 60, o.ä., ausgebildet ist.

Für den Einsatz in Fahrrädern 10 wird vorgeschlagen, nicht genutztes Volumen im Fahrradrahmen 28 oder anderen Stangen oder Rohren 32 bis 40 des Fahrrads 10 für die Installation des Geräts 60 zu nutzen. Besonders bietet sich hierbei das Innere der Sattelstange 32, des Lenkerrohrs 38, des Rahmenrohrs 36 oder des Gabelsteuerrohrs 34 an. Dabei wird bevorzugt - bis auf einen Luftspalt 80 - das gesamte Volumen in den Stangen oder Rohren 32 bis 40 für die Unterbringung des Geräts 60 ausgenutzt. Bevorzugt liegt eine Außenfläche des Gehäuses 62 vollflächig an einer Innenseite der Stangen oder Rohre 32 bis 40 an.

Weitere Module des Geräts 60, die ebenfalls in oder an dem Gehäuse 62 angeordnet sind, sind in dem Beispiel ein Ortungsmodul 70, ein Drahtloskommunikationsmodul 72, ein Verarbeitungsmodul 74 und ein Sensormodul 76. Diese Module 70 bis 76 bilden eine Hardware des Geräts 60 und sind vorzugsweise alle auf einer gemeinsamen Platine 78 angeordnet und elektrisch kontaktiert. Bevorzugt sind die Module 70 bis 76 in Halbleitertechnik auf der Platine 78 realisiert.

Das Ortungsmodul 70 umfasst einen Satellitennavigations-Empfänger, der Signale 110 von Satelliten 112 eines GPS-, Galileo-, GLONASS-, Compass- und/oder Beidou-Navigationssatelliten-Netzwerks empfangen kann. Anhand von Zeitstempeln der von verschiedenen Satelliten 112 eines Navigationssatelliten-Netzwerks empfangenen Signale 110 und einem Vergleich mit dem tatsächlichen Empfangszeitpunkt der Signale 110 durch den Satellitennavigations-Empfänger kann das Ortungsmodul 70 die Entfernung zu den einzelnen Satelliten 112 und ferner die aktuelle Position auf der Erdoberfläche mit einer Genauigkeit von wenigen Metern berechnen. Die Berechnung der aktuellen Position des Geräts 60 und damit des Fahrrads 10 erfolgt in dem Ortungsmodul 70 oder in dem Verarbeitungsmodul 74.

Die Ortung des Fahrrads 10 mittels des Navigationssatelliten-Netzwerks kann durch unterschiedliche Verfahren überprüft, verifiziert oder optimiert werden. Denkbar wäre bspw. eine zusätzliche Mobilfunk-Triangulation oder eine WLAN-Lokalisation oder die Nutzung (bzw. Auswertung) von Bluetooth (-Verbindungsinformationen), um die Genauigkeit der Ortung zu verbessern und eine zuverlässige Ortung auch in Innenräumen (z.B. Fahrradkeller, Garage, etc.) zu ermöglichen.

Das Drahtloskommunikationsmodul 72 verwendet einen IoT (Internet of Things)-Standard für die Datenübertragung. Insbesondere wird vorgeschlagen, dass das Drahtloskommunikationsmodul 72 zum Aussenden von Daten 114 mit Informationen über die ermittelte Position des Fahrrads 10 über ein LP WAN-Netzwerk ausgebildet ist. Zu diesem Zweck ist das Drahtloskommunikationsmodul 72 ausgebildet, die Daten 114 über ein Narrowband-Internet of Things-(NB IoT)- und/oder ein Long Term Evolution for Machines (LTE-M)-Drahtloskommunikationsnetzwerk auszusenden. Eine Basisstation eines solchen Netzwerks ist mit dem Bezugszeichen 116 bezeichnet. Sowohl LTE-M als auch NB-IoT basieren auf einer (zellulären) Mobilfunktechnologie und sind so konzipiert, dass sie sich besonders gut für die globale IoT-Konnektivität eignen. LTE-M und NB-IoT sind beides Verbindungstechnologien, welche die Vorteile der LP WAN-Technologie (Low Power Wide Area Networks) nutzen, welche die Akkulaufzeit des Geräts 60 erhöht. Beide Technologien sind heute verfügbar, standardisiert und basieren auf dem 4G-Netz (LTE), was bedeutet, dass sie zukunftssicher sind, über eine globale Netzabdeckung verfügen und durch GSMA- und Telekommunikationsstandards unterstützt werden.

Bevorzugt umfasst das Drahtloskommunikationsmodul 72 Vorrichtungen zum Aussenden von Daten 114 sowohl über ein NB IoT- als auch über ein LTE-M-Drahtloskommunikationsnetzwerk. Eine Logik in dem Gerät 60, die in dem Verarbeitungsmodul 74 des Geräts 60 realisiert sein kann, kann bspw. je nach Anwendungserfordernis einen der beiden Standards auswählen, der für die aktuelle Datenübertragung besser geeignet ist. Die Auswahl kann bspw. in Abhängigkeit von Kommunikationsparametern (z.B. von der Anzahl der durch das Datenkommunikationsmodul 72 erreichbaren Basisstationen 116 oder von der Signalstärke von Signalen 114, die von dem Gerät 60 an die Basisstationen 116 ausgesandt oder durch das Gerät 60 von den Basisstationen 116 empfangen werden) und/oder in Abhängigkeit von geräteinternen Parametern (z.B. von den Positionsdaten des Fahrrads 10) erfolgen. Der niederfrequente NB IoT-Standard stellt eine besonders energiesparende Datenübertragung zur Verfügung. Der höherfrequente LTE-M-Standard verbraucht etwas mehr Energie, kann aber eine zuverlässige Datenübertragung auch durch dicke Gebäudewände hindurch sicherstellen.

Das Verarbeitungsmodul 74 umfasst bspw. eine Recheneinheit (z.B. einen Mikroprozessor oder Mikrocontroller), auf der ein Computerprogramm (z.B. Firmware und/oder Software) abläuft, und/oder eine Speichereinheit (z.B. ROM, EPROM, EEPROM, RAM, o.ä.).

Das Sensormodul 76 kann bspw. einen Beschleunigungssensor (sog. G-Sensor) umfassen. Dieser Sensor dient zur Detektion einer Inbetriebnahme des Fahrrads 10. Dabei kann anhand einer einzigen detektierten Erschütterung, die einen vorgebbaren Schwellenwert übersteigt, oder anhand eines vorgebbaren Musters mehrerer detektierter Erschütterungen auf eine Bewegung und/oder Inbetriebnahme des Fahrrads 10 geschlossen werden.

Ferner kann ein Alarmmodul (nicht gezeigt) auf der Platine 78 der Hardware des Geräts 60 vorgesehen sein, das eine oder mehrere Einheiten zur Erzeugung und Ausgabe eines akustischen Alarms aufweist, falls ein unautorisiertes Bewegen des Fahrrads 10 detektiert wird oder falls von außerhalb (bspw. von einem mobilen Endgerät eines Nutzers aus) ein entsprechender Befehl an das Alarmmodul übermittelt wird, bspw. über ein Nahbereichsfunknetzwerk (bspw. Bluetooth, WLAN oder NFC).

Ferner wird vorgeschlagen, dass das Gerät 60 einen in dem Gehäuse 62 des Geräts 60 integrierten mechanischen Spannmechanismus 82 zur Befestigung des Geräts 60 im Inneren der Stange oder des Rohrs 32 des Fahrrads 10 aufweist. Der Spannmechanismus 82 umfasst radial nach außen bewegbare Spannelemente 84 auf, die mittels einer Betätigungsvorrichtung 86 (bspw. einer Schraube) radial nach außen bewegt werden können. Durch das nach außen Bewegen der Spannelemente 84 kann das Gerät 60 dauerhaft im Inneren der Sattelstange 32/ des Lenker-/ Rahmen-/ Gabel-Rohres 34 bis 40 nach Art eines Spreizdübels festgekrallt werden. Zumindest zum Lösen des Spannmechanismus 82 ist ein Werkzeug erforderlich, sodass das Gerät 60 von einem Dieb nicht ohne weiteres aus der Stange oder dem Rohr 32 gelöst und entnommen werden kann. Besonders bevorzugt ist es, wenn der Spannmechanismus 82 nur mit einem speziellen, geräteindividuellen Werkzeug gelöst werden kann. Zu diesem Zweck kann der Spannmechanismus 82 eine Sicherheitsschraube 86 aufweisen.

Bei dem Ausführungsbeispiel aus Fig. 2 weist das Gerät 60 einige zusätzliche Komponenten auf. So ist bspw. auf der Platine 78 ein Alarmmodul 88 vorgesehen. Ferner kann das Gerät 60 eine Stromerzeugungsvorrichtung 90, insbesondere in der Form eines Lineardynamos, aufweisen, die dem Energiemodul 68 zugeordnet ist. Der Lineardynamo 90 generiert während eines Betriebs des Fahrrads 10 Strom zum Aufladen der Batterie 66. Alternativ oder zusätzlich kann der generierte Strom auch direkt zum Betrieb des Geräts 60 bzw. von dessen Modulen und Komponenten genutzt werden. Der Lineardynamo 90 ist innerhalb des Gehäuses 62 des Geräts 60 angeordnet. Er kann aber auch außerhalb des Gehäuses 62 angeordnet sein und über ein Kabel an dem Gerät 60 bzw. dessen Energiemodul 68 angeschlossen sein.

Der Lineardynamo 90 kann einen starken, bspw. zylindrisch geformten Magneten 92 (z.B. aus Neodym) umfassen, der an einer Feder 94 befestigt ist und durch seine Gewichtskraft in einem Führungsrohr 96 vertikal auf und ab schwingen kann (vgl. Pfeil 98). Konzentrisch zum Schwingungsweg 98 des Magneten 92 ist eine Spule 100 derart angeordnet, dass bei der der vertikalen auf und ab Bewegung 98 des Magneten 92 in der Spule 100 ein Strom induziert wird, der zum Laden des geräteinternen Energiemoduls 68 (Akkumulator 66) genutzt werden kann. Diese Konstellation funktioniert bei der Integration des Gerätes 60 in ein vertikal angeordnetes Sattel-, Gabelsteuer- oder Lenkerrohr 32, 34, 38 besonders gut, wobei die bei der Nutzung und dem Betrieb des Fahrrads 10 auftretenden Erschütterungen genutzt werden, um den Magneten 92 in die lineare, vertikale auf und ab Bewegung 98 zu versetzen und den Akku 66 aufzuladen.

Ferner kann das Gerät 60 eine Ladespule 102 aufweisen. Die Ladespule 102 ist vorzugsweise in das Gerät 60 integriert, d.h. innerhalb des Gehäuses 62 angeordnet. Sie kann aber auch außerhalb des Gehäuses 62 angeordnet und über ein Kabel mit dem Energiemodul 68 verbunden sein. Mit Hilfe der Ladespule 102 kann das geräteinterne Energiemodul 68 (Akkumulator 66) von außen, induktiv durch das Material des Rohrs oder der Stange 32 des Fahrrads 10, in dem/ in der das Gerät 60 angeordnet ist, hindurch aufgeladen werden. Somit kann ein Ladevorgang des internen Akkumulators 66 ohne Ausbau des Gerätes 60 aus dem Fahrrad 10 erfolgen. Auch das Freilegen eines Anschlusskabels des Geräts 60 zum Aufladen des Akkumulators 66 ist nicht erforderlich.

Denkbar wäre es ferner, dass ein von außen auf die Ladespule 102 gelegtes induktives Ladegerät 104 an dem Rohr oder der Stange 32 bzw. 36 des Fahrrads 10 bspw. magnetisch fixiert wird. Das Ladegerät 104 kann über einen Netzanschluss, bspw. in der Form eines Stromkabels mit Stecker, an ein Stromnetz angeschlossen und der interne Akkumulator 66 über die Ladespule 102 berührungslos aufgeladen werden. Zu diesem Zweck weist das Ladegerät 104 ebenfalls eine Ladespule 106 auf. Alternativ oder zusätzlich zu dem Netzanschluss könnte das Ladegerät 104 seinerseits mit einem oder mehreren Akkumulatoren 106 ausgestattet sein, um den Ladevorgang des geräteinternen Akkumulators 66 mobil auch ohne Stromnetz vor Ort zu ermöglichen. In diesem Fall würde zunächst der Akkumulator 108 des Ladegeräts 104 an einem festen Ort mit Stromnetz aufgeladen und anschließend vor Ort zum Fahrrad 10 gebracht werden, wo es dann in der Nähe der Ladespule 102 aufgelegt (und möglicherweise befestigt) wird. Dann wird der Ladevorgang des geräteinternen Akkumulators 66 vor Ort durchgeführt. Das Fahrrad 10 kann somit an seinem Ort (z.B. in der Garage, im Fahrradkeller, im Hof, auf der Straße) verbleiben.

Das erfindungsgemäße Gerät ist außerdem ausgebildet, die Informationen über die ermittelte (bevorzugt aktuelle) Position des Geräts (und damit in der Regel auch des Fahrrads, an dem das Gerät angebracht ist) mittels einer Funkverbindung an einen Nutzer zu übertragen. Die Übertragung an den Nutzer bzw. dessen Endgerät kann direkt, bspw. über eine WLAN-, Bluetooth- oder NFC-Verbindung, oder aber indirekt, bspw. über einen Internet- oder Netzwerk-Server, erfolgen, zu dem sich der Nutzer mit seinem Endgerät Zugang verschaffen muss.

Es ist denkbar, dass Drahtloskommunikationsmodul 72 auch zum Aussenden und/oder Empfangen von Daten 118 über eine Wireless Local Area Network (WLAN oder WiFi)-, eine Bluetooth- und/oder eine Near Field Communication (NFC)-Drahtloskommunikationsverbindung ausgebildet ist. Ein Empfänger 120 der WLAN-, Bluetooth- oder NFC-Funkkommunikationsverbindung kann bspw. Bestandteil eines mobilen Endgeräts 122 (z.B. Smartphone, Tablet-PC, etc.) eines Nutzers sein. Ein berührungssensitiver Bildschirm des Endgeräts 122 als Nutzerschnittstelle ist mit dem Bezugszeichen 124 bezeichnet.

Bevorzugt kann eine auf dem Verarbeitungsmodul 74 des Geräts 60 ablaufende Software oder Firmware des Geräts 60 über die WLAN-, Bluetooth- und/oder NFC-Drahtloskommunikationsverbindung 118 aktualisiert werden. Zu diesem Zweck kann bspw. das mobiles Endgerät 122 oder ein Diagnosegerät (nicht gezeigt) über die Drahtloskommunikationsverbindung 118 an das Gerät 60 angebunden werden. Das Update der Software oder Firmware ist auf dem Endgerät 122 oder dem Diagnosegerät abgespeichert oder aber es wird bspw. über das Internet in das Endgerät 122 oder das Diagnosegerät geladen und dann an das Verarbeitungsmodul 74 des Geräts 60 übertragen und dort in einer Speichereinheit abgespeichert.

Ferner können Betriebsparameter des Geräts 60 über die WLAN-, Bluetoothund/oder NFC-Drahtloskommunikationsverbindung 118 eingestellt werden. Zu diesem Zweck kann bspw. das mobiles Endgerät 122 über die Drahtloskommunikationsverbindung 118 an das Gerät angebunden werden. Die Einstellung der Betriebsparameter kann bspw. über eine auf dem mobilen Endgerät 122 ablaufende Applikation (Computerprogramm oder App) durch den Nutzer des Endgeräts 122 erfolgen. Alternativ kann die Anbindung des Endgeräts 122 an das Gerät 60 auch über das LP WAN 114, insbesondere das Internet, erfolgen. Die Einstellungen der Betriebsparameter werden aus der Applikation an das Verarbeitungsmodul 74 des Geräts 60 übertragen und dort in einer Speichereinheit abgespeichert.

Außerdem können die während des Betriebs des Fahrrads 10 von dem Ortungsmodul 70 des Geräts 60 ermittelte Positionsdaten des Fahrrads 10 über die WLAN-, Bluetooth- und/oder NFC-Drahtloskommunikationsverbindung 118 direkt an das mobile Endgerät 122 eines Fahrers des Fahrrads 10 übertragen werden. Auf diese Weise kann der Fahrer seine Fahrtstrecke tracken (als Fahrtenlog oder Fahrtenbuch oder zur Fahrzeugverwaltung), zu einem späteren Zeitpunkt auswerten oder über Social-Media posten. Zu diesem Zweck läuft auf dem mobilen Endgerät 122 vorzugsweise eine Applikation (Computerprogramm oder App) ab, mit deren Hilfe die Positionsdaten abgespeichert und zu der Fahrtstrecke zusammengesetzt werden. Diese Applikation kann auch zum Auswerten und/oder zum Posten der Fahrtstrecke genutzt werden.

Es ist ferner denkbar, dass das mobile Endgerät 122 als Schlüssel zum Freischalten des Geräts 60 und zur Freigabe des Fahrrads 10 verwendet wird. Auf diese Weise kann unterschieden werden, ob das Fahrrad 10 autorisiert oder unerlaubt verwendet wird. Dazu kann sich das Gerät 60 bei Nichtnutzung des Fahrrads 10 in einem Standby-Modus mit sehr niedrigem Stromverbrauch befinden. Bei der Detektion eines Betriebs des Fahrrads 10 durch das Sensormodul 76, bspw. anhand von Erschütterungen so wie sie bei einer Nutzung generiert werden, versetzt das Sensormodul 76 oder das Verarbeitungsmodul 74 des Geräts 60 die Hardware in den Normalbetriebs-Modus. Dann versucht das Gerät 60, eine WLAN-, Bluetoothoder NFC-Verbindung 118 zu dem Endgerät 122 aufzubauen und dieses zu authentifizieren. Wenn der Verbindungsaufbau und die Authentifizierung des mobilen Endgeräts 122 durch das Gerät 60 erfolgreich sind, wird das Gerät 60 für eine bestimmte Zeitdauer wieder in den Standby-Modus versetzt, um Energie zu sparen.

Falls der Verbindungsaufbau über die WLAN-, Bluetooth- oder NFC-Verbindung 118 oder die Authentifizierung des mobilen Endgeräts 122 nicht erfolgreich ist, kann das Gerät 60 über das LP-WAN 114 eine Verbindung zu einem Backend-Server herstellen. Dieser prüft zunächst den Standort des mobilen Endgeräts 122. Ist der Standort nicht bekannt oder die Entfernung des Endgeräts 122 zu dem erfindungsgemäßen Gerät 60 überschreitet eine vorgegebene Grenze (sog. Geofencing), wird das Gerät 60 in den Normalbetriebs- oder Tracking-Modus versetzt und der Nutzer über seine Applikation auf seinem Endgerät 122 informiert, dass sein Fahrrad 10 nicht autorisiert bewegt wird. Der Nutzer kann den Vorgang abbrechen oder das Tracking weiterlaufen lassen, um zu verfolgen, wo sich sein Fahrrad 10 aktuell befindet.

In diesem Sinne ist bevorzugt, dass das Verarbeitungsmodul 74 ausgebildet ist, das Gerät 60 nur dann aus dem Standby-Modus in den Normalbetriebs-Modus zu versetzen, in dem das Gerät 60 die volle Funktionsfähigkeit einschließlich Positionsermittlung und Datenaussenden hat, falls ein vorangegangener Datenaustausch mit dem mobilen Endgerät 122 eines Fahrers des Fahrrads 10 über die WLAN-, Bluetooth- und/oder NFC-Drahtloskommunikationsverbindung 118 zu einer erfolgreichen Authentifizierung des Endgeräts 122 geführt hat.

Schließlich wird vorgeschlagen, dass dem Drahtloskommunikationsmodul 72 eine eSIM (embedded Subscriber Identity Module) statt einer herkömmlichen SIM-Karte zugeordnet ist. Die eSIM umfasst eine auf einem Halbleiter gespeicherte Identifikationsnummer, welche unabhängig vom Land oder Mobilfunkanbieter verwendet wird. Die eSIM bzw. das entsprechende Halbleiterbauteil kann als SMD-Bauteil auf der Platine 78 angeordnet und kontaktiert sein. Nach der vollständigen Bestückung der Platine 78 kann diese vollständig umspritzt werden, bspw. im Spritzgussverfahren mit duroplastischem Kunststoff.

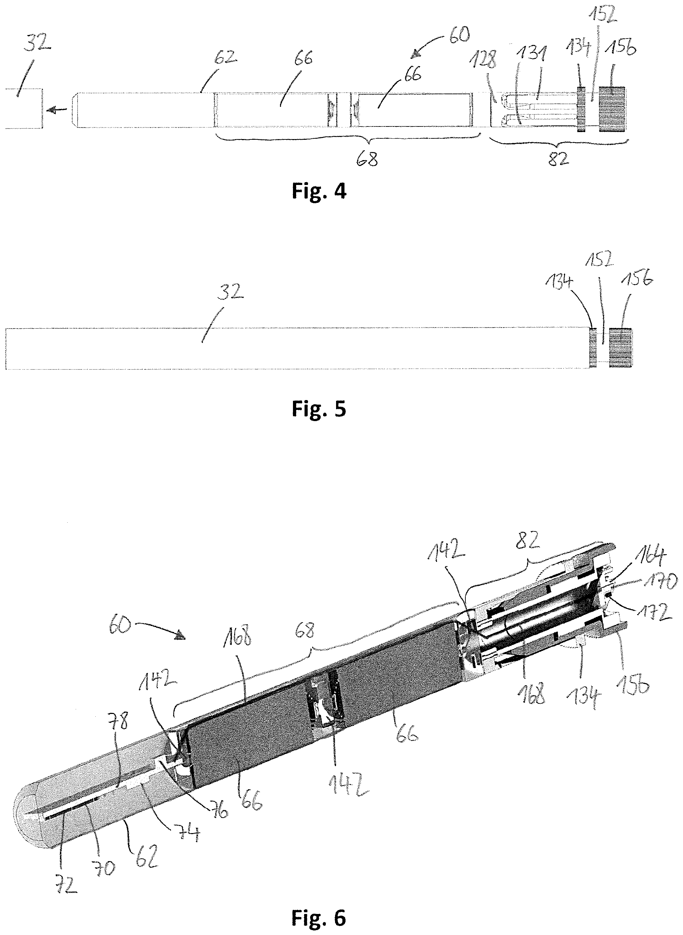

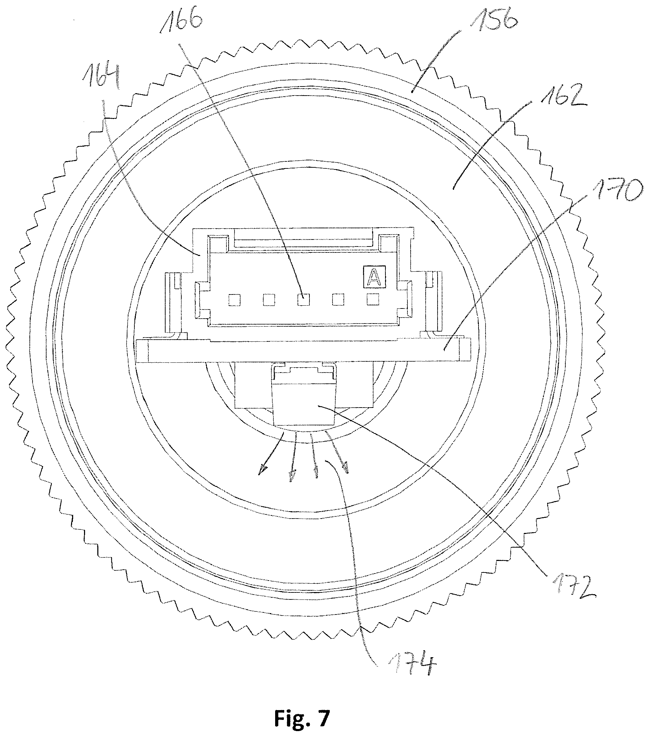

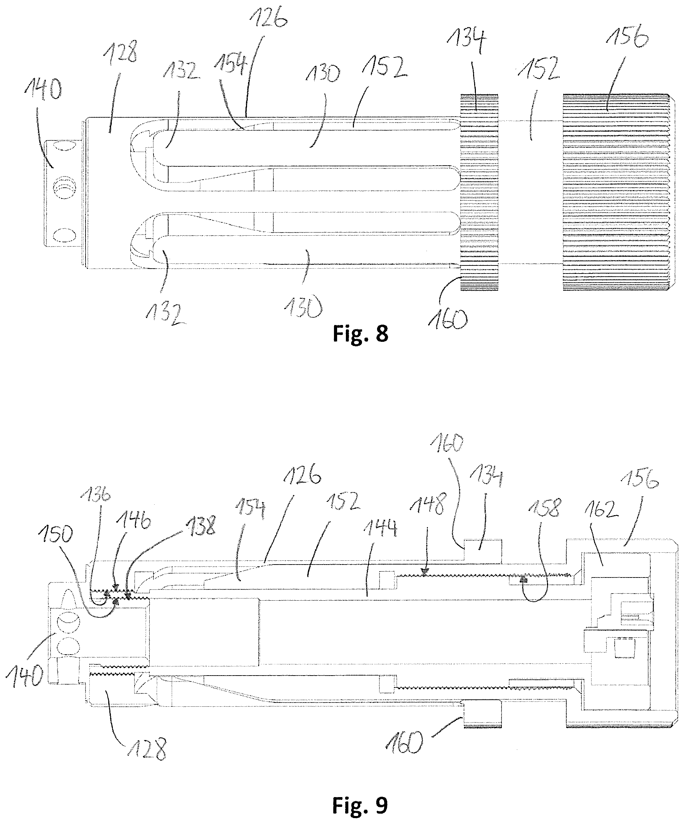

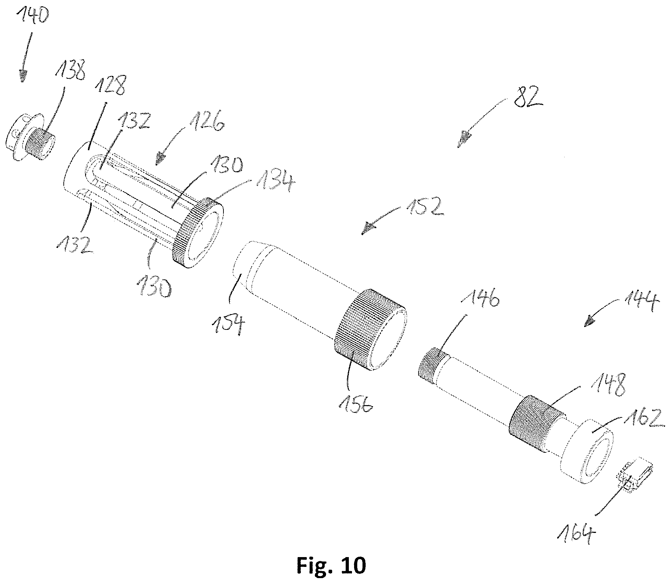

In den Fign. 4 bis 10 sind weitere Ausführungsbeispiele und weitere Details des erfindungsgemäßen Ortungsgeräts 60 gezeigt. Fig. 4 zeigt das Gerät 60 - im Bereich des Energiemoduls 68 - teilweise im Längsschnitt. Das Gerät 60 kann in ein unteres Ende der Sattelstange 32 oder in eine beliebig andere Stange oder Rohr 34 - 40 eines Fahrrads 10 eingesetzt. Der Spannmechanismus 82 ist in einer anderen Weise ausgebildet als in den zuvor beschriebenen Ausführungsbeispielen, was weiter unten anhand der Fign. 8 bis 10 noch näher erläutert wird.

Das Gehäuse 62 besteht bevorzugt aus einem hochfesten Duroplast- oder Duromermaterial und wird bspw. mittels eines Spritzguss-Verfahrens hergestellt. Das Duroplastmaterial ist durchlässig für elektromagnetische Wellen, so dass Ortungs-Signale 110 von Satelliten 112, LP-WAN-Signale 114 zu Basisstationen 116 eines Drahtloskommunikationsnetzwerks und Drahtloskommunikationsverbindungen 118 zwischen dem Gerät 60 und einem mobilen Endgerät 122 durch das Gehäuse 62 hindurchtreten können bzw. durch dieses kaum abgeschwächt werden. Andererseits ist das Gehäuse 62 vorzugsweise so steif, dass es bspw. im Bereich der Batterien 66 sehr dünnwandig ausgeführt werden kann, bspw. um weitere Strom führende Bauteile zwischen Batterien 66 und Gehäuse 62 aufnehmen und führen zu können. Die Platine 78 und die darauf angeordneten Bauteile 70 bis 76 sowie die Batteriekontakte 142 sind vollständig wasserdicht und vibrationsfest mit dem Duroplastmaterial umschlossen und geschützt.

Leere bzw. hohle Bereiche im Innenraum des Gehäuses 62, insbesondere die Platine 78 und die darauf angeordneten Bauteile 70 bis 76, können mit einer Vergussmasse, vorzugsweise einem Vergussharz, verfüllt sein, um die einzelnen Bauteile im Inneren des Gehäuses 62 festzulegen, Vibrationen zu vermeiden, und die Bauteile vor mechanischen Belastungen (z.B. Schlägen, Stößen) und Feuchtigkeit zu schützen. Dadurch ergibt sich ein besonders robustes, widerstandsfähiges und langlebiges Gerät 60.

Wie man anhand der Fign. 8-10 erkennen kann, umfasst der Spannmechanismus 82 ein Spannelement 126, das einen hohlzylinderförmigen Träger 128 und über seinen Außenumfang verteilt mehrere längliche Spannbacken 130 umfasst, die radial nach außen beweglich an dem Träger 128 gelagert oder befestigt sind. Es ist auch denkbar, dass die Spannbacken 130 selbst aus einem elastischen Material bestehen, so dass ihre distalen Enden 132 radial nach außen bewegbar sind. An einem Ende des Spannelements 126 ist ein Halteelement 134 angeordnet, das als ein Rändelrad ausgebildet sein kann. Das Halteelement 134 ist bevorzugt drehfest an dem Träger 128 befestigt oder wird durch einen Teil des Trägers 128 gebildet. Ein zylinderförmiger Innenraum erstreckt sich über die gesamte Länge des Spannelements 126. Das Spannelement 126 weist über einen Teilbereich einer Innenwandung des Innenraums ein Innengewinde 136 auf.

Ferner umfasst der Spannmechanismus 82 ein Ankerelement 140 mit einem Außengewinde 138 auf. Das Ankerelement 140 wird bei der Herstellung des Gehäuses 62 des Geräts 60 bspw. mittels Spritzguss, beim Spritzvorgang zusammen mit der Platine 78 und Kontakten 142 für die Batterien 66 in ein Spritzgusswerkzeug eingelegt und ist nach dem Spritzvorgang fester Bestandteil des Gehäuses 62. Ein zylinderförmiger Innenraum erstreckt sich über die gesamte Länge des Ankerelements 140.

Der Spannmechanismus 82 umfasst ferner eine hohlzylinderförmige Lagerachse 144, die ein erstes Außengewinde 146 und ein zweites Außengewinde 148 aufweist, das einen größeren Umfang aufweist als das erste Außengewinde 146. Ein zylinderförmiger Innenraum erstreckt sich über die gesamte Länge der Lagerachse 144. Die Lagerachse 144 weist über einen Teilbereich einer Innenwandung des Innenraums, insbesondere im Bereich des ersten Außengewindes 146, ein Innengewinde 150 auf. An einem dem ersten Außengewinde 146 gegenüberliegenden Ende der Lagerachse 144 ist ein Kopfabschnitt 162 mit einem gegenüber der restlichen Lagerachse 144 größeren Außendurchmesser ausgebildet. Schließlich umfasst der Spannmechanismus 82 ein ebenfalls hohlzylinderförmiges Gleitelement 152, das ein konusförmig zusammenlaufendes distales Ende 154 aufweist. Dem konusförmigen Ende 154 gegenüberliegend weist das Gleitelement 152 ein Betätigungselement 156 auf, das als ein Rändelrad ausgebildet sein kann. Das Betätigungselement 156 ist drehfest an dem restlichen Gleitelement 152 befestigt oder wird durch einen Teil des Gleitelements 152 gebildet. Ein zylinderförmiger Innenraum erstreckt sich über die gesamte Länge des Gleitelements 152. Im Bereich des Betätigungselements 156 hat der Innenraum einen größeren Durchmesser als in dem restlichen Gleitelement 152. Über einen Teilbereich des Innenraums, bevorzugt zwischen dem konusförmigen Ende 154 und dem Betätigungselement 156 weist das Gleitelement 152 ein Innengewinde 158 auf.

Zum Montieren des Spannmechanismus 82 werden die verschiedenen Teile 126, 152, 144 ineinandergeschoben, wobei die Lagerachse 144 durch den zylinderförmigen Innenraum des Gleitelements 152 und das Gleitelement 152 durch den zylinderförmigen Innenraum des Spannelements 126 aufgenommen wird. Dabei wird das Spannelement 126 mit seinem Innengewinde 136 auf das erste Außengewinde 146 der Lagerachse 144 geschraubt. Die Lagerachse 144 wird mit ihrem Innengewinde 150 auf das Außengewinde 138 des in dem Gehäuse 62 befestigten oder Teil des Gehäuses 62 bildenden Ankerelements 140 geschraubt. Ferner wird das Gleitelement 152 mit seinem Innengewinde 158 so weit auf das zweite Außengewinde 148 der Lagerachse 144 geschraubt, dass das Gleitelement 152 an der Lagerachse 144 gehalten wird, aber nicht so weit, dass das Gleitelement 152 bereits die distalen Enden 132 der Spannbacken 130 radial nach außen drückt.

Damit ist der Spannmechanismus 82 an dem Gehäuse 62 des Geräts 60 montiert und dieses kann nun bevorzugt von unten in die Sattelstange 32 eingeführt werden. Es wird dabei bevorzugt so weit eingeführt, bis eine ringförmige Anschlagfläche 160 des Halteelements 134 gegen das untere Ende der Sattelstange 32 schlägt. Dann wird das Gleitelement 152, bevorzugt manuell über das Betätigungselement 156, betätigt. Vorzugsweise wird das Gleitelement 152 dabei mit seinem Innengewinde 158 weiter auf das zweite Außengewinde 148 der Lagerachse 144 geschraubt. Dabei bewegt sich das Gleitelement 152 weiter entlang einer Längsachse des Spannmechanismus 82 in Richtung des Ankerelements 140. Dabei kann die schräge Fläche des konusförmigen Endes 154 die Spannbacken 130 radial nach außen drücken, so dass sie an der Innenwandung der Sattelstange 32 zur Auflage kommen und sich dort sogar verkrallen können. Dadurch ist das Gerät 60 mittels des Spannmechanismus 82 kraftschlüssig und eventuell sogar formschlüssig in der Sattelstange 32 gehalten.

Die zylinderförmigen hohlen Innenräume in den Teilen 140, 126, 152 und insbesondere der Lagerachse 144 haben den Vorteil, dass durch diese Innenräume elektrische Leitungen 168 von der Platine 78 und den elektrischen Bauelementen 70 bis 76 am vorderen Ende des Geräts 60 zu dem Kopfabschnitt 162 der Lagerachse 144 bzw. dem Betätigungsabschnitt 156 des Gleitelements 152 an dem hinteren Ende des Geräts 60 geführt werden können, wobei die Abschnitte 162, 156 bei in einer Sattelstange 32 angeordnetem und befestigtem Gerät 60 aus der Sattelstange 32 hervorragen und für einen Nutzer des Fahrrads 10 zugänglich oder sichtbar sind. Die elektrischen Leitungen 168 können bspw. als ein Flachbandkabel oder als eine flexible Leiterplatte ausgebildet sein.

In dem zylinderförmigen Hohlraum des Kopfabschnitts 162 der Lagerachse 144 kann ein Steckerelement 164 zum Anschluss einer Energieversorgung (bspw. zum Aufladen aufladbarer Batterien 66) und/oder eines Steuergeräts oder Computers (bspw. zum Aufspielen von Software- oder Firmware-Updates auf 72) angeordnet sein. Das Steckerelement 164 bzw. dessen Steckerkontakte 166 sind über die elektrischen Leitungen mit Leitungen bzw. Kontakten auf der Platine 78 elektrisch leitend verbunden. Das Steckerelement 164 kann auf einer Hilfsplatine 170 angeordnet und über diese elektrisch kontaktiert sein.

Auf der Hilfsplatine 170 kann zudem eine Lichtquelle 172, bspw. in Form einer LED, besonders bevorzugt eine RGB-LED, angeordnet und elektrisch kontaktiert sein. Die Lichtquelle 172 kann als Statusanzeige oder Warnlampe verwendet werden. Die Lichtquelle 172 sendet ihr Licht 174 bevorzugt in den hohlen Innenraum des Kopfabschnitts 156 der Lagerachse 144, so dass ein Nutzer das Licht 174 von außerhalb der Sattelstange 32 erkennen kann. Bevorzugt ist der hohle Innenraum des Kopfabschnitts 156 der Lagerachse 144 mit einer transparenten oder teiltransparenten (teilopaken) Vergussmasse, insbesondere mit einem Vergussharz, vergossen. Dadurch sind die Platine 170 und die daran befestigten elektrischen Bauteile 164, 172 fixiert und vor mechanischen Belastungen und Feuchtigkeit geschützt. Zudem kann die Vergussmasse als optisch wirksames Element genutzt werden, in das die Lichtquelle 172 das ausgesandte Licht 174 einkoppelt. Das eingekoppelte Licht 174 kann in der Vergussmasse umgelenkt und/oder geformt werden, so dass das von der Lichtquelle 172 ausgegebene Signal besonders gut von außerhalb der Sattelstange 32 wahrgenommen werden kann. Bevorzugt wird das Licht 174 um das Steckerelement 164 herum gleichmäßig aus der Vergussmasse ausgekoppelt.

## Patentansprüche

1. Elektronisches Gerät (60) zur Ortung eines Fahrrads (10), das Gerät (60) umfassend:
- ein Ortungsmodul (70) zum Empfang von Signalen (110) von Navigationssatelliten (112) und zur Ermittlung einer Position des Fahrrads (10) in Abhängigkeit von den empfangenen Signalen (110),
- ein Drahtloskommunikationsmodul (72) zum Aussenden von Daten (114) mit Informationen über die ermittelte Position des Fahrrads (10) über ein Drahtloskommunikationsnetzwerk (116), und
- ein Energiemodul (68) zur Versorgung des Ortungsmoduls (70) und des Drahtloskommunikationsmoduls (72) mit elektrischer Energie,
**dadurch gekennzeichnet, dass** das Gerät (60) ausgebildet ist, von außen unsichtbar im Inneren einer Stange oder eines Rohrs (32 - 40) des Fahrrads (10) angeordnet und dort vorzugsweise befestigt zu werden, wobei die Stange oder das Rohr (32 - 40) insbesondere eine Sattelstange (32), ein Gabelsteuerrohr (34), ein Rahmenrohr (36) oder ein Lenkerrohr (38) des Fahrrades (10) umfasst.

2. Gerät (60) nach Anspruch 1, wobei das Drahtloskommunikationsmodul (72) zum Aussenden von Daten (114) mit Informationen über die ermittelte Position des Fahrrads (10) über ein Low Power Wide Area Network (LP WAN)-Drahtloskommunikationsnetzwerk (116) ausgebildet ist.

3. Gerät (60) nach Anspruch 1 oder 2, wobei das Drahtloskommunikationsmodul (72) zum Aussenden von Daten (114) mit Informationen über die ermittelte Position des Fahrrads (10) über ein Narrowband-Internet of Things-(NB IoT)- oder ein Long Term Evolution for Machines (LTE-M)-Drahtloskommunikationsnetzwerk (116) ausgebildet ist.

4. Gerät (60) nach einem der vorhergehenden Ansprüche, wobei das Gerät (60) ein Sensormodul (76) aufweist, das vorzugsweise einen Beschleunigungssensor zur Detektion von Erschütterungen des Fahrrads (10) umfasst.

5. Gerät (60) nach einem der vorhergehenden Ansprüche, wobei das Gerät (60) ein Verarbeitungsmodul (74) aufweist, das ausgebildet ist, das Gerät (60) aus einem Standby-Modus mit minimalem Energieverbrauch in einen Normalbetriebs-Modus zu versetzen, in dem das Gerät (60) die volle Funktionsfähigkeit einschließlich Positionsermittlung und Datenaussenden hat.

6. Gerät (60) nach Anspruch 5, wobei das Verarbeitungsmodul (74) ausgebildet ist, das Gerät (60) aus dem Standby-Modus in den Normalbetriebs-Modus zu versetzen, wenn ein Sensormodul (76) des Geräts (60) eine Beschleunigung detektiert, die oberhalb eines vorgebbaren Beschleunigungsschwellwerts liegt.

7. Gerät (60) nach einem der vorhergehenden Ansprüche, wobei das Gerät (60) ein hohlzylindrisches Gehäuse (62) mit einem kreisförmigen oder ovalen Querschnitt aufweist, in dem sämtliche Module (68 - 76) des Geräts (60) angeordnet sind.

8. Gerät (60) nach einem der vorhergehenden Ansprüche, wobei das Gerät (60) einen in einem Gehäuse (62) des Geräts (60) integrierten mechanischen Spannmechanismus (82) zur Befestigung des Geräts (60) im Inneren der Stange oder des Rohrs (32 - 40) des Fahrrads (10) aufweist, wobei zumindest zum Lösen des Spannmechanismus (82) ein Werkzeug erforderlich ist.

9. Gerät (60) nach Anspruch 8, wobei der Spannmechanismus (82) ausgebildet ist, dass er nur mit einem speziellen, geräteindividuellen Werkzeug gelöst werden kann.

10. Gerät (60) nach einem der vorhergehenden Ansprüche, wobei das Energiemodul (68) eine aufladbare Batterie (66) aufweist und dem Gerät (60) eine Stromerzeugungsvorrichtung (90), insbesondere in der Form eines Lineardynamos, zugeordnet ist, welche während eines Betriebs des Fahrrads (10) Strom zum Aufladen des Energiemoduls (68) generiert.

11. Gerät (60) nach einem der vorhergehenden Ansprüche, wobei das Energiemodul (68) eine aufladbare Batterie (66) aufweist, die von außerhalb des Fahrrads (10) berührungslos, insbesondere induktiv über eine Ladespule (102), aufgeladen werden kann.

12. Gerät (60) nach einem der vorhergehenden Ansprüche, wobei das Drahtloskommunikationsmodul (72) zum Aussenden und Empfangen von Daten über eine Wireless Local Area Network (WLAN oder WiFi)-, eine Bluetooth- und/oder eine Near Field Communication (NFC)-Drahtloskommunikationsverbindung (118) ausgebildet ist.

13. Gerät (60) nach Anspruch 12, wobei eine auf einem Verarbeitungsmodul (74) des Geräts (60) ablaufende Software oder Firmware des Geräts (60) über die WLAN-, Bluetooth- und/oder NFC-Drahtloskommunikationsverbindung (118) aktualisierbar ist und/oder wobei Betriebsparameter des Geräts (60) über die WLAN-, Bluetooth- und/oder NFC-Drahtloskommunikationsverbindung (118) einstellbar sind.

14. Gerät (60) nach Anspruch 12 oder 13, wobei während eines Betriebs des Fahrrads (10) von dem Ortungsmodul (70) des Geräts (60) ermittelte Positionen des Fahrrads (10) über die WLAN-, Bluetooth- und/oder NFC-Drahtloskommunikationsverbindung (118) an ein mobiles Endgerät (122) eines Fahrers des Fahrrads (10) übertragbar sind.

15. Gerät (60) nach einem der Ansprüche 12 bis 14, wobei das Gerät (60) ein Verarbeitungsmodul (74) aufweist, das ausgebildet ist, das Gerät (60) nur dann aus einem Standby-Modus mit minimalem Energieverbrauch in einen Normalbetriebs-Modus zu versetzen, in dem das Gerät (60) die volle Funktionsfähigkeit einschließlich Positionsermittlung und Datenaussenden hat, falls ein vorangegangener Datenaustausch mit einem mobilen Endgerät (122) eines Fahrers des Fahrrads (10) über die WLAN-, Bluetooth- und/oder NFC-Drahtloskommunikationsverbindung (118) zu einer erfolgreichen Authentifizierung des Endgeräts (122) geführt hat.

16. Gerät (60) nach einem der vorhergehenden Ansprüche, wobei dem Drahtloskommunikationsmodul (72) eine eSIM (embedded Subscriber Identity Module) zugeordnet ist.

17. Fahrrad (10) mit oder ohne motorischem Antrieb, umfassend zwei oder drei Räder (18, 20), von denen mindestens eines (18) lenkbar ist, mindestens einen Sattel (26) für einen Fahrer des Fahrrads (10), Stangen und/oder Rohre (23 - 40), und ein Gerät (60) zur Ortung des Fahrrads (10),
**dadurch gekennzeichnet, dass** das Gerät (60) nach einem der vorhergehenden Ansprüche ausgebildet und von außen unsichtbar im Inneren einer Stange oder eines Rohrs (32 - 40) des Fahrrads (10) angeordnet und dort vorzugsweise befestigt ist, wobei die Stange oder das Rohr (32 - 40) insbesondere eine Sattelstange (32), ein Gabelsteuerrohr (34), ein Rahmenrohr (36) oder ein Lenkerrohr (38) des Fahrrades (10) umfasst.
